(19) Europäisches Patentamt / European Patent Office / Office européen des brevets

(11) EP 3 937 566 B1

(12) EUROPEAN PATENT SPECIFICATION

(45) Date of publication and mention of the grant of the patent: **29.11.2023 Bulletin 2023/48**

(21) Application number: **20784169.3**

(22) Date of filing: **16.02.2020**

(51) International Patent Classification (IPC):
***H04W 74/00*** *(2009.01)* ***H04L 5/00*** *(2006.01)*
*H04W 72/0453* *(2023.01)* *H04W 74/08* *(2009.01)*

(52) Cooperative Patent Classification (CPC):
**H04W 74/006; H04L 5/0044; H04L 5/0094;**
H04W 72/0453; H04W 74/0808

(86) International application number: **PCT/CN2020/075452**

(87) International publication number: **WO 2020/199769 (08.10.2020 Gazette 2020/41)**

(54) **CONTROL INFORMATION TRANSMISSION METHODS, COMPUTER-READABLE STORAGE MEDIUM AND COMMUNICATIONS APPARATUS**

VERFAHREN ZUR ÜBERTRAGUNG VON STEUERUNGSINFORMATIONEN, COMPUTERLESBARES SPEICHERMEDIUM UND KOMMUNIKATIONSVORRICHTUNG

PROCÉDÉS DE TRANSMISSION D'INFORMATIONS DE COMMANDE, SUPPORT DE STOCKAGE LISIBLE PAR ORDINATEUR ET APPAREIL DE COMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 CN 201910260529**

(43) Date of publication of application: **12.01.2022 Bulletin 2022/02**

(73) Proprietor: **Huawei Technologies Co., Ltd.**
**Shenzhen, Guangdong 518129 (CN)**

(72) Inventor: **ZHANG, Jiayin**
**Shenzhen, Guangdong 518129 (CN)**

(74) Representative: **Grünecker Patent- und Rechtsanwälte**
**PartG mbB**
**Leopoldstraße 4**
**80802 München (DE)**

(56) References cited:
**CN-A- 106 304 199** **CN-A- 108 702 783**

- **TCL COMMUNICATION: "Wideband carrier usage for NR-U", 3GPP DRAFT; R1-1902544_WIDEBAND_OPERATION_FOR_NR-U_TCL _FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051600239, Retrieved from the Internet: URL:http://www.3gpp.org/ftp/tsg%5Fran/WG1%5FRL1/TSGR1%5F96/Docs/R1%2D1902544%2Ezip [retrieved on 2019-02-15]**
- **HUAWEI ET AL: "NRU wideband BWP operation", 3GPP DRAFT; R1-1901529, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051599226, Retrieved from the Internet: URL:http://www.3gpp.org/ftp/tsg%5Fran/WG1%5FRL1/TSGR1%5F96/Docs/R1%2D1901529%2Ezip [retrieved on 2019-02-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- HUAWEI et al.: "NR Numerology and Frame Structure for Unlicensed Bands", R1- 1808058 3GPP TSG RAN WG1 Meeting #94, 24 August 2018 (2018-08-24), XP051515462, DOI: 20200420150143A
- HUAWEI et al.: "DL channels and signals in NR unlicensed band", R1-1812192 3GPP TSG RAN WG1 Meeting #95, 16 November 2018 (2018-11-16), XP051554064, DOI: 20200420150427A

## Description

### TECHNICAL FIELD

This application relates to the communications field, and more specifically, to control information transmission methods, a computer-readable storage medium and a communications apparatus.

### BACKGROUND

Rapid development of wireless communications technologies leads to an increasing shortage of spectrum resources, and promotes exploration of unlicensed frequency bands. 3GPP respectively introduces a licensed assisted access (Licensed Assisted Access, LAA) technology and an enhanced licensed assisted access (enhanced LAA, eLAA) technology in Release-13 (Release-13, R-13) and R-14. An LTE/LTE-A system is deployed on an unlicensed spectrum in a non-standalone (Non-standalone) manner, and usage of unlicensed spectrum resources is maximized with assistance of a licensed spectrum.

A communications system deployed on the unlicensed spectrum usually uses/shares radio resources in a contention manner. For example, a same or similar principle is used between stations, in the 802.11 protocol framework of the Institute of Electrical and Electronics Engineers (Institute of Electrical and Electronics Engineers, IEEE), including an access point (AP) and a non-AP station, to fairly contend for and use the unlicensed spectrum resources. Generally, before sending a signal, a station first monitors whether the unlicensed spectrum is idle, for example, determines a busy /idle state of the unlicensed spectrum based on a value of receive power in the unlicensed spectrum. If the receive power is less than a specific threshold, it is considered that the unlicensed spectrum is in the idle state, and the signal may be sent in the unlicensed spectrum. If the receive power is greater than or equal to the threshold, no signal is sent. This mechanism of monitoring before sending is referred to as listen before talk (listen before talk, LBT).
Technical report "TCL COMMUNICATION, "Wideband carrier usage for NR-U", vol. RAN WG1, Athens, Greece; 2019-02-15, 3GPP DRAFT; R1-1902544 WIDEBAND OPERATION FOR NR-U TCL FINAL" discusses three proposals relating to the issue that when LBT succeeds on a fraction of the wideband carrier frequency, say a subset of sub-bands are found to be available for transmission and another complementary subset of subbands is found to be busy, how to best use the available subbands of the wideband carrier.

Broadband transmission supported in an NR-Unlicensed (NR-U for short) system includes transmission in a manner of aggregating a plurality of carriers or by using a broadband carrier. Because many narrowband systems coexist in the unlicensed spectrum, a user in a broadband transmission mode suffers narrowband interference, and therefore, LBT and channel listening need to be performed on a sub-band. Considering uncertainty of the narrowband interference, in the broadband transmission mode, actual bandwidth available to a transmit end for transmission depends on a result of the LBT performed on the sub-band, and is dynamically adjusted based on the result. To enable a receive end to accurately know actual bandwidth of the transmit end, the transmit end needs to notify the receive end of actual transmission bandwidth. FIG. 1 is a schematic diagram of two broadband transmission modes. As shown in FIG. 1, a transmit end performs LBT on each 20 MHz sub-band, where LBT on a bottom 20 MHz sub-band fails (solid dots), and the transmit end can send a signal on only a remaining 60 MHz sub-band (slash lines). A receive end (for example, user equipment UE) may adjust a receive filter based on transmission bandwidth, to reduce adjacent-band interference. In addition, when a data channel is demodulated, receive energy mapped to a sub-band on which no transmission is performed may be removed from a decoding process, to improve reception reliability. Therefore, the UE needs to learn of information about the transmission bandwidth.

### SUMMARY

This application provides control information transmission methods, a computer-readable storage medium and a communications apparatus to improve data transmission performance. The present invention is defined according to the independent claims. The dependent claims recite advantageous embodiments of the invention.

As defined by claim 1, the invention provides a control information transmission method comprising: receiving, by a terminal device, a first control message on a first resource, wherein the first control message carries a transmission bandwidth indication field, the transmission bandwidth indication field is a first value, and the first value indicates that a current transmission bandwidth indication is an invalid indication; receiving, by the terminal device, a second control message on a second resource, wherein the second control message carries the transmission bandwidth indication field, the transmission bandwidth indication field is a second value, and the second value indicates an actual transmission bandwidth, wherein the first resource and the second resource are in a same channel occupancy time COT; and transmitting, by the terminal device, data on the actual transmission bandwidth.

In a possible design which is defined by dependent claim 2, the first control message and the second control message are group common-physical downlink control channels GC-PDCCHs.

In a possible design which is defined by dependent claim 3, after receiving the first control message, the terminal device increases a periodicity for detecting downlink control information.

In a possible design which is defined by dependent claim 4, after receiving the second control message, the terminal device adjusts a quantity of sub-bands on which the downlink control information is detected.

In a possible design which is defined by dependent claim 5, the terminal device receives data on a third resource, where an interval between the third resource and the second resource is at least one time unit.

In a possible design which is defined by dependent claim 6, the first control message carries information about the second resource.

As defined by claim 7, the invention provides a control information transmission method, comprising: sending, by a network device, a first control message to a terminal device on a first resource, wherein the first control message carries a transmission bandwidth indication field, the transmission bandwidth indication field is a first value, and the first value indicates that a current transmission bandwidth indication is an invalid indication; sending, by the network device, a second control message to the terminal device on a second resource, wherein the second control message carries the transmission bandwidth indication field, the transmission bandwidth indication field is a second value, and the second value indicates an actual transmission bandwidth, wherein the first resource and the second resource are in a same channel occupancy time COT; and transmitting, by the network device, data with the terminal device on the actual transmission bandwidth.

In a possible design which is defined by dependent claim 8, the first control message and the second control message are group common-physical downlink control channels GC-PDCCHs.

In a possible design which is defined by dependent claim 9, the first control message carries information about the second resource.

In a possible design which is defined by dependent claim 10, the network device sends data to the terminal device on a third resource, where an interval between the third resource and the second resource is at least one time unit.

As defined by claim 11, the invention provides a computer-readable storage medium having program code stored thereon which, when run on a computer, causes the computer to perform the method according to any one of claims 1 to 6 or claims 7 to 10.

As defined by claim 12, the invention provides a communications apparatus, comprising: a processor and a memory, wherein the processor is configured to execute instructions stored in the memory to perform the method according to any one of claims 1 to 6 or the method according to any one of claims 7 to 10.

## BRIEF DESCRIPTION OF DRAWINGS

FIG. 1 is a schematic diagram of two broadband transmission modes;
FIG. 2 is a schematic diagram of a communications system applicable to this application;
FIG. 3 is a schematic diagram of a manner of carrying information about a transmission bandwidth;
FIG. 4 is a schematic diagram of a manner of carrying information about a transmission bandwidth;
FIG. 5 is a schematic diagram of a manner of carrying information about a transmission bandwidth;
FIG. 6 is a schematic diagram of a control information transmission method according to an embodiment of this application;
FIG. 7 is a schematic diagram of a manner of carrying information about a transmission bandwidth;
FIG. 8 is a schematic diagram of a method for detecting downlink control information;
FIG. 9 is a schematic diagram of a manner of carrying information about a transmission bandwidth;
FIG. 10 is a schematic block diagram of a control information transmission apparatus 1000 according to an example not being part of the present invention but helpful for understanding the present invention;
FIG. 11 is a schematic block diagram of a control information transmission apparatus 1100 according to example not being part of the present invention but helpful for understanding the present invention;
FIG. 12 is a schematic block diagram of a communications apparatus 1200 according to an embodiment of this application;
FIG. 13 is a schematic diagram of a method for adjusting a channel access manner;
FIG. 14 is a schematic diagram of a method for adjusting a channel access manner; and
FIG. 15 is a schematic diagram of a method for adjusting a channel access manner.

## DESCRIPTION OF EMBODIMENTS

The following describes technical solutions of this application with reference to the accompanying drawings.

The technical solutions of embodiments of this application may be applied to various communications systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a 5th generation (5th generation, 5G) system, or a new radio (new radio, NR) system. This application is mainly applied to a 5G NR-U system. This application may also be applied to another communications system, provided that an entity in the communications system needs to send data or needs to learn of information about a transmission bandwidth.

FIG. 2 is a schematic diagram of a communications system applicable to this application. A communications system 100 includes a network device 110 and a terminal device 120. The terminal device 120 communicates with the network device 110 by using an electromagnetic wave.

In this application, the terminal device 120 may be user equipment, an access terminal, a subscriber unit, a subscriber station, a mobile station, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

The network device 110 may be a base station defined by 3GPP, for example, a base station (such as a gNB) in a 5G communications system. The network device 110 may alternatively be a non-3GPP (non-3GPP) access network device, for example, an access gateway (access gateway, AG). The network device 110 may alternatively be a relay station, an access point, a vehicle-mounted device, a wearable device, or a device of another type.

The communications system 100 is merely an example for description, and a communications system applicable to this application is not limited thereto. For example, the communications system 100 may include another quantity of network devices and another quantity of terminal devices. For example, the communications system may further include a terminal device 130.

The following describes a control information transmission method provided in the embodiments of this application by using an example in which a network device is a base station and a terminal device is UE. Control information includes information about a transmission bandwidth. The transmission bandwidth may be a sub-band on which LBT succeeds, a sub-band on which LBT fails, a sub-band on which transmission is actually performed, or a sub-band on which no transmission is performed. The sub-band herein may be a frequency band of any bandwidth. A quantity of sub-bands is also not limited. Optionally, the information about the transmission bandwidth may be considered as information about a result of the LBT on each sub-band. The information about the transmission bandwidth may be represented by a transmission bandwidth indication (transmission bandwidth indication). The transmission bandwidth indication may be a field, a field, or several bits. For example, when an entire bandwidth is 80 MHz and a sub-band bandwidth is 20 MHz, a transmission bandwidth indication field may include 4 bits. When an entire bandwidth is 160 MHz and a sub-band bandwidth is 20 MHz, a transmission bandwidth indication field may include 8 bits.

The UE needs to learn of the information about the transmission bandwidth. Therefore, the base station needs to notify the UE of the information. Specifically, the methods in which the base station sends the information about the transmission bandwidth to the UE or the UE learns of the information about the transmission bandwidth may be as follows:

Method 1: The base station sends a physical downlink control channel (Physical Downlink Control Channel, PDCCH) at a start position of a channel occupancy time (Channel Occupancy Time, COT). For example, the base station may send a PDCCH at a start position of a COT of each sub-band. The UE may obtain the information about the transmission bandwidth by using demodulation reference signals (Demodulation Reference Signal, DMRS) in the PDCCH. If the UE detects sequences of the DMRSs on one or more sub-bands, it indicates that the base station sends a signal on the one or more sub-bands. The UE may consider that the one or more sub-bands are sub-bands on which transmission is actually performed. FIG. 3 is a schematic diagram of a manner of carrying information about a transmission bandwidth. As shown in FIG. 3, a bold-line box in FIG. 3 represents one 14-symbol slot (slot). A black square represents a PDCCH, and a maximum of three symbols can be configured for the PDCCH. Subcarriers corresponding to the three symbols carry DMRSs (gray parts) of the PDCCH. The UE determines, by detecting sequences of these DMRSs, whether a signal is sent on the sub-band.

Because the detection is performed based on the sequence of the DMRSs, when a subcarrier spacing is relatively large, there are relatively few resource blocks (resource block, RB) carrying the DMRSs, and a length of a detectable sequence of DMRSs in a 20 MHz bandwidth is insufficient, resulting in relatively low detection reliability.

Method 2: FIG. 4 is a schematic diagram of a manner of carrying information about a transmission bandwidth. As shown in FIG. 4, the base station transmits a group common-PDCCH (Group Common-PDCCH, GC-PDCCH) in a control resource set (Control Resource Set, CORESET) at a start position of a COT. The GC-PDCCH explicitly carries a transmission bandwidth indication and other COT configuration information. The UE obtains transmission bandwidth indication information by demodulating the GC-PDCCH.

It takes time to prepare content of the GC-PDCCH, and a transmit end can start to prepare the content of the GC-PDCCH only after LBT is completed. Therefore, an interval (for example, the interval before the slot 1 in FIG. 4) is required between completion of the LBT and transmission of data. In this interval, another device may preempt a channel. As a result, the base station cannot continue to send data.

Method 3: FIG. 5 is a schematic diagram of a manner of carrying information about a transmission bandwidth. As shown in FIG. 5, the base station does not send, at a start position of a COT, a GC-PDCCH to indicate a transmission bandwidth, but sends the GC-PDCCH in a latest CORESET obtained after the base station prepares the GC-PDCCH. The GC-PDCCH is sent at a start position of the second slot after the COT is obtained. The UE updates, from the second slot for receiving, a receiver by using transmission bandwidth indication information.

Because no transmission bandwidth indication is received in the first slot in the COT, a transmission bandwidth indication received in the second slot cannot correspond to the first slot, and the UE cannot determine a transmission bandwidth of the first slot. Therefore, when the UE receives data in the first slot, strong adjacent-channel interference may occur, resulting in receiving performance deterioration. Even during retransmission combining, receive energy corresponding to a sub-band on which no transmission is performed in the first slot cannot be excluded from a decoding process, affecting the receiving performance. The retransmission combining means that retransmitted data and initially transmitted data are combined or jointly demodulated, to obtain more reliable data. The retransmission combining may also be referred to as HARQ combining or HARQ retransmission combining. In addition to indicating the transmission bandwidth, the GC-PDCCH also indicates the start position of the COT. After detecting the GC-PDCCH, the UE may adjust a PDCCH detection frequency to reduce power consumption. For example, detection is not performed by using a symbol as a granularity, but performed by using a slot as a granularity.

Further, an embodiment of this application provides a control information transmission method, to reduce a transmission delay and a risk of channel loss that are caused when a base station sends a bandwidth indication. In some scenarios, performance loss and power consumption may also be reduced when UE demodulates a start part of a COT. FIG. 6 is a schematic diagram of a control information transmission method according to an embodiment of this application. As shown in FIG. 6, the method includes the following steps.

Step 601: A base station sends a first control message to UE on a first resource.

The first control message carries a transmission bandwidth indication field. The transmission bandwidth indication field is a first value, where the first value indicates that a current transmission bandwidth indication is an invalid indication or that an actual transmission bandwidth is carried in a subsequent control message.

Step 602: The base station sends a second control message to the UE on a second resource.

The second control message carries the transmission bandwidth indication field. The transmission bandwidth indication field is a second value, where the second value indicates the actual transmission bandwidth. Specifically, the second value may indicate a sub-band or sub-bands on which the base station performs downlink transmission with the UE. The first value and the second value may be determined by using a bitmap (bitmap), a sub-band status index, or a BIV

Step 603: The base station transmits data with the UE in the actual transmission bandwidth.

The first resource and the second resource may be in a same channel occupancy time COT, or in a resource occupied by same downlink transmission. The first resource and the second resource may be time resources or time-frequency resources.

The first control message and the second control message are GC-PDCCHs. The GC-PDCCH is transmitted on a control resource set (control resource set, CORESET) corresponding to a common search space (common search space) of a Type 3-PDCCH. Optionally, the first control message and the second control message may alternatively be other PDCCHs transmitted in a common search space (common search space) or a user-specific search space (UE specific search space).

Further, the first control message carries information about the second resource. In other words, the base station may notify, in the first control message, the UE of a specific position to receive the second control message. In this way, the UE may detect the second control message at a corresponding position based on the first control message.

Further, after receiving the first control message, the UE adjusts a periodicity for detecting downlink control information. After receiving the second control message, the UE adjusts a quantity of sub-bands on which the downlink control information is detected. For example, after receiving the first control message, the UE increases the periodicity for detecting downlink control information. After receiving the second control message, the UE decreases the quantity of sub-bands on which the downlink control information is detected.

Further, the base station sends data to the UE on a third resource. An interval between the third resource and the second resource is at least one time unit. The time unit may be a slot, a mini-slot, or a symbol. The UE may adjust a receive filter of the UE by using the interval of the time unit. The base station may communicate with another UE in the interval of the time unit without losing a channel.

Further, the UE performs retransmission combining after receiving the second control message. A signal or data (for example, a PDSCH) that is received before the second control message is received and that is beyond the actual transmission bandwidth does not participate in the retransmission combining. Alternatively, the PDSCH received before the second control message is received does not participate in the retransmission combining.

The second value carried in the second control message, namely, updated actual transmission bandwidth information (for example, specific sub-bands on which transmission may be performed), may be used to indicate a bandwidth used for subsequent downlink transmission, or may be applied to retransmission combining of downlink transmission before the UE receives the second control message (where for example, a HARQ process that does not successfully acknowledge before the second control message is received corresponds to a PDSCH).

It should be noted that the actual transmission bandwidth indicated by the second value may be a transmission bandwidth in a current COT. In other words, the UE may determine that a transmission bandwidth obtained when the first control message is received is the actual transmission bandwidth indicated by the second value. The UE may trace back to determine a transmission bandwidth in an entire COT. For example, a transmission bandwidth indication received by the UE in the first slot of the COT is a first value, and a transmission bandwidth indication received in the second slot of the COT is a second value. The UE may determine an actual transmission bandwidth in the first slot based on the second value.

In addition, when sub-bands on which LBT succeeds are discontinuous, the method provided in this embodiment of this application is still applicable. In this embodiment of this application, four sub-bands are used as an example for description. A case in which more or fewer sub-bands are used may be similarly obtained. Any sub-band in these sub-bands may be a sub-band on which LBT fails (or LBT succeeds). A sub-band 4 is not necessary to be the sub-band on which the LBT fails, and this is not limited. For example, a sub-band 1, a sub-band 2, and the sub-band 4 may be the sub-bands on which the LBT succeeds, and a sub-band 3 may be the sub-band on which the LBT fails. In these cases, the method provided in this embodiment of this application may still be used. For a carrier aggregation scenario, one sub-band corresponds to one independent carrier. For example, in the carrier aggregation scenario in FIG. 1, sub-bands 1 to 4 may respectively correspond to four carriers. In this case, the transmission bandwidth indication carries information about these carriers. In other words, in this embodiment of this application, information about the transmission bandwidth may be the information about the carriers.

In this embodiment of this application, the transmission bandwidth indication field may be carried in the GC-PDCCH. An invalid indication (for example, all "0s") is set in the field, indicating that a current GC-PDCCH does not carry information about the actual transmission bandwidth, and the information is carried in a subsequent GC-PDCCH.

According to the method in this embodiment of this application, the base station may send the GC-PDCCH when the downlink transmission (or the COT) starts. The GC-PDCCH may carry an initial signal, a COT format, and the transmission bandwidth indication, to avoid generating a sending interval after the LBT ends, thereby avoiding loss of a channel use right.

The UE may reduce a quantity of times of blind detection of the PDCCH based on the transmission bandwidth indication. In addition, the UE may temporarily buffer all received signals, and update a HARQ combining buffer based on subsequently updated bandwidth information, thereby improving PDSCH receiving performance in an initial phase of the COT.

The following further describes the method provided in this application by using an example in which the first control message and the second control message are GC-PDCCHs. The following embodiments may be interchangeably used.

## Embodiment 1

A base station sends a GC-PDCCH at a start position of a COT. A transmission bandwidth indication of the GC-PDCCH is set to a predefined value. In a possible manner, the predefined value indicates that an actual transmission bandwidth of UE is indicated in a subsequent GC-PDCCH. In another possible manner, a value in a current transmission bandwidth indication field is an invalid indication, and the base station subsequently needs to send indication information to indicate a transmission bandwidth. When the UE detects that a transmission bandwidth indication in a current GC-PDCCH is an invalid indication, the UE may temporarily perform reception on a configured bandwidth part (BandWidth Part, BWP) or an entire bandwidth of a carrier. The UE may trace and determine, based on a subsequent valid transmission bandwidth indication, the transmission bandwidth obtained when the invalid indication is received.

A GC-PDCCH that needs to be sent subsequently carries a transmission bandwidth indication (which may be considered as a result of LBT) indicating the actual transmission bandwidth. The base station sends the GC-PDCCH in a sending opportunity of a next GC-PDCCH in the COT. The UE adjusts a receive filter based on the transmission bandwidth indication in the GC-PDCCH. In other words, the UE adjusts a receive bandwidth to receive information or data transmitted in the remaining part of the COT. The UE may further adjust previously received data that is buffered and that needs to be retransmitted and combined in a HARQ process. For example, the UE discards white noise or interference received on a sub-band on which LBT fails, and does not perform retransmission combining on the white noise or the interference.

FIG. 7 is a schematic diagram of a manner of carrying information about a transmission bandwidth. As shown in FIG. 7, a transmission bandwidth indication carried in a GC-PDCCH in a slot 1 in FIG. 7 is an invalid indication. UE needs to detect a GC-PDCCH in a slot 2 to re-obtain the transmission bandwidth indication. When the UE detects a PDSCH in the slot 1, because there is no useful data transmission in a sub-band 4 in the slot 1, reception fails. For subsequent retransmission combining, the UE buffers all received signals corresponding to the slot 1 and combines the received signals with subsequent retransmitted data. The UE learns, by using the transmission bandwidth indication in the GC-PDCCH in the slot 2, that the received signal that is previously buffered and that is in the sub-band 4 in the slot 1 is invalid, and excludes this part from the retransmission combining when the previously buffered data and the retransmitted data are combined.

A GC-PDCCH sent at a start position of a COT helps the UE obtain information about the start position of the COT, thereby reducing power consumption for blind detection of the PDCCH. In addition, information about a transmission bandwidth is provided in a subsequent GC-PDCCH, so that the UE adjusts a bandwidth (or adjusts a receive filter) of received data and a range of the retransmission combining based on an updated transmission bandwidth indication. This reduces interference received on a sub-band on which LBT fails, and improves receiving performance of data before the transmission bandwidth indication is updated.

**Embodiment 2**

A transmission bandwidth indication may be in the following manners.

Manner 1: A bitmap (bitmap) is used. Each bit corresponds to one sub-band. One sub-band may be determined based on a channel raster (channel raster) and a sub-band bandwidth (for example, 20 MHz) that are defined in a regulation. The sub-band may be configured by using higher layer signaling (for example, RRC signaling). If a bit in the bitmap is set to a first value (for example, set to " 1"), it indicates that a base station sends a signal on the sub-band (where LBT succeeds). If the bit is set to a second value (for example, set to "0"), it indicates that a base station does not send a signal on the sub-band (where LBT fails). If all corresponding bits are set to 0, it indicates that a current transmission bandwidth indication is invalid, and needs to be updated based on a subsequent indication. In other words, when the transmission bandwidth indication is all 0s, it indicates an invalid indication. When the base station configures four sub-bands, 4 bits may be used to indicate all continuous and discontinuous transmission bandwidths. When the base station configures eight sub-bands, 8 bits may be used to indicate all continuous and discontinuous transmission bandwidths.

Manner 2: A sub-band status index is used. Sub-band combinations that may be sent by the base station are displayed in a table and numbered in a unified manner. One number (for example, "0") indicates that a current bandwidth indication is invalid and needs to be updated based on a subsequent indication. An example table is shown in Table 1. In Table 1, a row number represents the sub-band status index, and each column represents one sub-band. Gray indicates that the base station performs transmission on the sub-band (or indicates that the sub-band is a sub-band on which transmission is actually performed). When the base station configures four sub-bands, 4 bits may be used for numbering to indicate all the continuous and discontinuous transmission bandwidths. If a gNB does not support discontinuous sub-band transmission, numbers 11 to 15 in Table 1 may be reserved. When the base station configures eight sub-bands, 8 bits may be used for numbering to indicate all the continuous and discontinuous transmission bandwidths.

**Table 1 Indication method of manner 2**

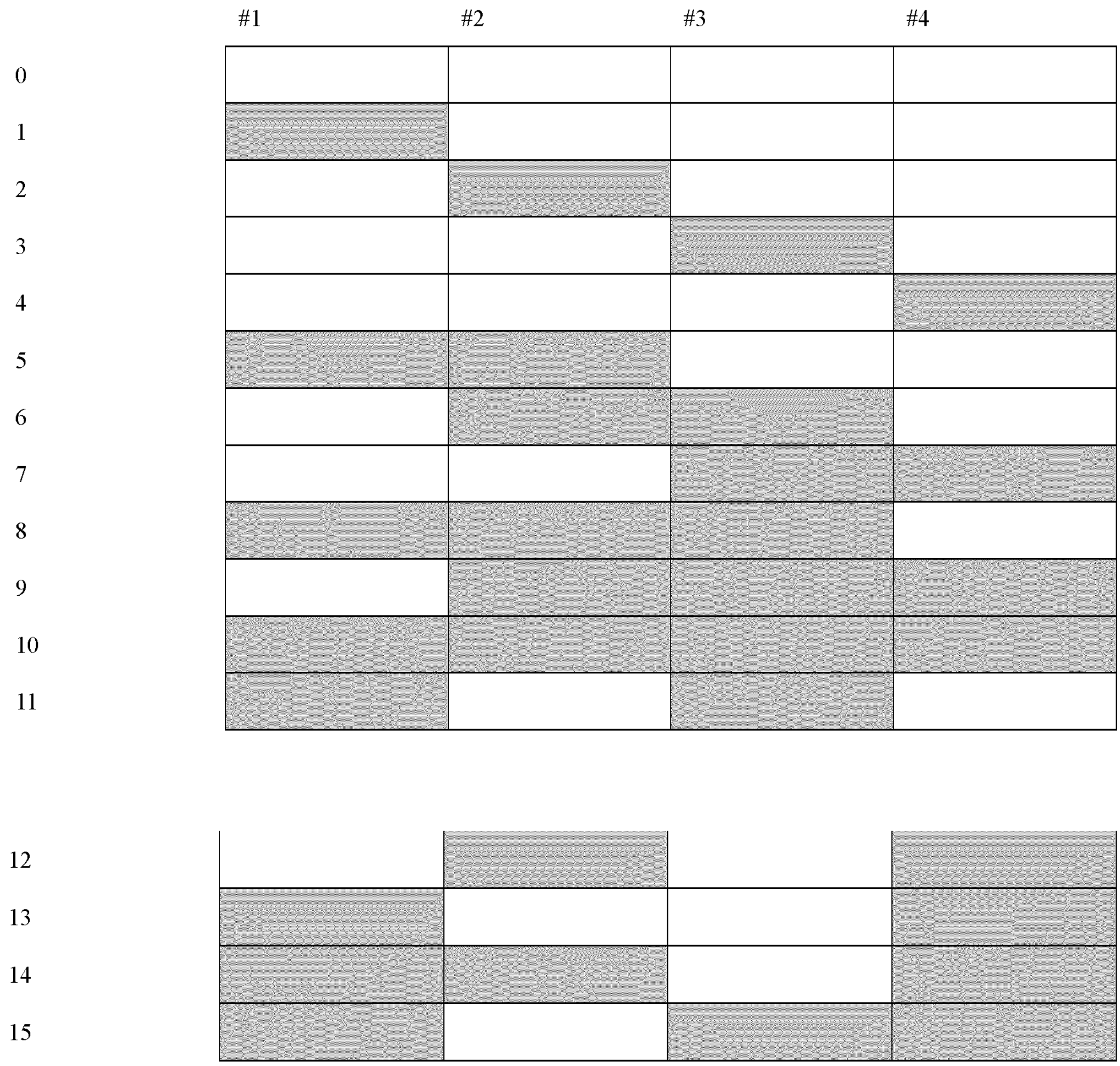


Manner 3: When only continuous sub-band transmission is supported, bit compression may be performed by using a bandwidth indication value (Band width indication value, BIV), to reduce overheads. When an actual transmission bandwidth is L continuous sub-bands, the BIV may be used to represent a transmission bandwidth indication.

It is assumed that there are N sub-bands in total, and numbers of the sub-bands are 0, 1, ..., and N-1. If sub-bands on which the base station sends a signal are L continuous sub-bands starting from a sub-band S, S is any integer from 0 to N-1, and L is a positive integer less than N, the BIV may be obtained based on the following formulas:

$$\text{if } L-1 \le \lfloor N/2 \rfloor, \text{ then } BIV = N(L-1)+S;$$

or

$$\text{if } L-1 > \lfloor N/2 \rfloor, \text{ then } BIV = N(N-L+1)+(N-1-S).$$

When a quantity N of sub-bands is large, for example, when N=8, only $\log_2 (N(N+1)/2)=6$ bits are required for indication. The UE may directly calculate, based on the BIV and without querying the table, a start point (for example, the sub-band S) and a length (for example, L) of the sub-band on which the transmission is actually performed. An unused value is selected from values corresponding to the six bits as an invalid indication, indicating an invalid transmission bandwidth indication, that is, indicating that the current bandwidth indication is invalid. A valid transmission bandwidth indication may be obtained in a subsequent GC-PDCCH. For example, BIV=63 may be selected to indicate that a current bandwidth is invalid.

In the foregoing manners, the base station may not only indicate the actual transmission bandwidth, but also indicate a sub-band on which the LBT succeeds. In this embodiment, a relatively small quantity of bits may be used to indicate various transmission bandwidths.

**Embodiment 3**

UE may adjust, based on a received first control message and a received second control message, a time domain position and/or a frequency domain position for detecting downlink control information. The UE detects a physical downlink control channel in a search space configured by a base station, where the physical downlink control channel carries the downlink control information. The search space is associated with a corresponding CORESET based on a specific periodicity. Therefore, there is a correspondence between detecting the downlink control information and detecting a CORESET that may be used to carry the downlink control information. Therefore, an example in which the CORESET is detected may be used for description. For example, after receiving a GC-PDCCH carrying an invalid transmission bandwidth indication, the UE adjusts only a periodicity for detecting the CORESET in time domain. A quantity of sub-bands for detecting the CORESET in frequency domain is adjusted only after a GC-PDCCH carrying a valid transmission bandwidth indication is received.

FIG. 8 is a schematic diagram of a method for detecting downlink control information. As shown in FIG. 8, before receiving any GC-PDCCH or a DMRS corresponding to the GC-PDCCH, UE intensively detects a CORESET in time domain. The UE also detects a CORESET on each sub-band. For example, a dashed-line box in a slot before a slot 1 in FIG. 8 represents a position at which the CORESET is detected. In the slot before the slot 1, the UE detects the CORESET on a plurality of sub-bands for a plurality of times. When detecting the GC-PDCCH or the DMRS of the GC-PDCCH, the UE detects whether the GC-PDCCH carries a valid transmission bandwidth indication (for example, the transmission bandwidth indication in Embodiment 2). Considering a processing delay of a base station, a GC-PDCCH in the slot 1 carries an invalid transmission bandwidth indication. Therefore, the UE does not detect a valid transmission bandwidth indication in the slot 1. The base station may send one or more GC-PDCCHs in the slot 1, for example, three GC-PDCCHs are sent, as shown in FIG. 8. After detecting the GC-PDCCH in the slot 1, the UE may learn of a start point at which the base station performs downlink transmission. Therefore, the CORESET does not need to be frequently detected in time domain. For example, next CORESET detection only needs to be performed at a start position of a slot 2. However, the UE does not learn of an exact sending bandwidth. Therefore, at the start position of the slot 2, the UE may still detect the CORESET on each sub-band. In FIG. 8, the UE detects a GC-PDCCH in the slot 2, where the GC-PDCCH carries a valid bandwidth indication. Starting from a slot 3, the UE only needs to detect the CORESET in one (or several) predefined sub-bands in each slot. In a possible implementation, if the UE may continuously detect the GC-PDCCH on one (or several) sub-bands on which the GC-PDCCH carrying the invalid transmission bandwidth indication is located, after receiving the GC-PDCCH carrying the invalid transmission bandwidth indication, the UE may adjust a periodicity for detecting the CORESET in time domain and a quantity of sub-bands for detecting the CORESET in frequency domain. For example, in FIG. 8, the UE may detect only one CORESET in the slot 2, and does not detect another CORESET in the slot 2. In other words, the GC-PDCCH is detected on one CORESET.

After the UE detects a valid GC-PDCCH, the UE may adjust a receive filter of the UE to match the receive filter with a sending bandwidth of the base station. In this way, out-of-band interference can be better suppressed.

**Embodiment 4**

In addition to carrying a transmission bandwidth indication, a GC-PDCCH may further carry information about a position at which a next GC-PDCCH is sent/detected, to help UE detect the GC-PDCCH more quickly, and obtain an updated transmission bandwidth indication. The information about the position of the next GC-PDCCH may include a time domain position indication and/or a frequency domain position indication. The position indication may be an absolute resource indication in a BWP, for example, a slot index or a PRB index, or may be a relative position indication indicating a position relative to a position of a current GC-PDCCH. For example, the $n^{th}$ slot after a slot in which the current GC-PDCCH is located includes a GC-PDCCH. The indication may be a separate field or control field in downlink control information, or may be identified by using a status index value that is not used in manner 2 or a BIV that is not used in manner 3 in Embodiment 2.

## Embodiment 5

When UE detects that a transmission bandwidth indication carried in a GC-PDCCH is an invalid indication, the UE learns that an actual transmission bandwidth needs to be obtained subsequently. All PDSCHs received by the UE before the UE receives a valid transmission bandwidth indication do not participate in retransmission combining, to avoid impact on performance of subsequent combination. Optionally, for retransmission before the valid transmission bandwidth indication is received, a more robust retransmission version, for example, an RV 0 or an RV 3, may be scheduled.

## Embodiment 6

When UE adjusts a receive filter bandwidth based on a valid transmission bandwidth indication carried in a GC-PDCCH, reception interruption occurs (an original receive buffer needs to be cleared). A base station may generate a transmission gap, for example, a transmission gap caused by the reception interruption of the UE. Therefore, the base station may schedule the UE at an interval of at least one time unit after sending the valid transmission bandwidth indication to the UE.

FIG. 9 is a schematic diagram of a manner of carrying information about a transmission bandwidth. A scheduling method shown in FIG. 9 is used to avoid a transmission gap (for example, a transmission gap caused by reception interruption of UE) generated by a base station, so that a probability of channel loss is reduced. As shown in FIG. 9, a plurality of UEs (for example, UE 1 and UE 2) receive, in a slot 2, a GC-PDCCH carrying a valid transmission bandwidth indication. It is assumed that the UE 2 does not need to receive a PDSCH, the UE 2 may adjust a receive filter bandwidth in the slot 2, so that the UE 2 may receive a PDSCH in a slot 3. It is assumed that the UE 1 still receives a PDSCH when receiving a GC-PDCCH of a slot 1, and the UE 1 cannot complete adjustment of a receive filter. Therefore, the base station needs to avoid scheduling the PDSCH of the UE 1 in the slot 3. This is helpful for the UE 1 to adjust the receive filter. After completing the adjustment in the slot 3, the UE 1 may continue receiving a PDSCH from a slot 4. Two UEs are alternately scheduled after receiving the valid transmission bandwidth indication, so that waste of sending intervals or resources can be avoided, and utilization of time domain resources can be improved.

The foregoing describes in detail the transmission method according to the embodiments of this application with reference to FIG. 2 to FIG. 9. Based on a same inventive concept, the following describes a transmission apparatus according to the embodiments of this application with reference to FIG. 10 to FIG. 12. It should be understood that the technical features described in the method embodiments are also applicable to the following apparatus embodiments.

FIG. 10 is a schematic block diagram of a control information transmission apparatus 1000 according to example not being part of the present invention but helpful for understanding the present invention. The apparatus 1000 is configured to perform the method performed by the network device (for example, the base station) in the foregoing method embodiments. Optionally, a specific form of the apparatus 1000 may be the base station or a chip in the base station. This is not limited in this example of this application. The apparatus 1000 includes the following modules:

a sending module 1010, configured to send a first control message to a terminal device on a first resource, where the first control message carries a transmission bandwidth indication field, the transmission bandwidth indication field is a first value, and the first value indicates that a current transmission bandwidth indication is an invalid indication; and
the sending module 1010 is further configured to send a second control message to the terminal device on a second resource, where the second control message carries the transmission bandwidth indication field, the transmission bandwidth indication field is a second value, and the second value indicates an actual transmission bandwidth; and
a receiving module 1020, configured to transmit data with the sending module 1010 on the actual transmission bandwidth.

The first resource and the second resource are in a same channel occupancy time COT, or in a resource occupied by same downlink transmission.

Further, the first control message carries information about the second resource. In other words, the base station may notify, in the first control message, UE of a specific position to receive the second control message. In this way, the UE may detect the second control message at a corresponding position based on the first control message.

Further, the sending module 1010 sends data to the terminal device on a third resource. An interval between the third resource and the second resource is at least one time unit. The time unit may be a slot, a mini-slot, or a symbol. The UE may adjust a receive filter of the UE by using the interval of the time unit. The base station may communicate with another UE in the interval of the time unit without losing a channel.

Further, the apparatus 1000 may further include a processing module 1030. The processing module is configured to process received data and to-be-sent data.

FIG. 11 is a schematic block diagram of a control information transmission apparatus 1100 according to example not being part of the present invention but helpful for understanding the present invention. The apparatus 1100 is configured to perform the method performed by the terminal device (for example, the UE) in the foregoing method embodiments. Optionally, a specific form of the apparatus 1100 may be the UE or a chip in the UE. This is not limited in this example of this application. The apparatus 1100 includes the following modules:

a receiving module 1110, configured to receive a first control message on a first resource, where the first control message carries a transmission bandwidth indication field, the transmission bandwidth indication field is a first value, and the first value indicates that a current transmission bandwidth indication is an invalid indication; and
the receiving module 1110 is further configured to receive a second control message on a second resource, where the second control message carries the transmission bandwidth indication field, the transmission bandwidth indication field is a second value, and the second value indicates an actual transmission bandwidth; and
a sending module 1120, configured to transmit data with the receiving module 1110 on the actual transmission bandwidth.

The first resource and the second resource are in a same channel occupancy time COT, or in a resource occupied by same downlink transmission.

Further, the first control message carries information about the second resource. In other words, a base station may notify, in the first control message, the UE of a specific position to receive the second control message. In this way, the UE may detect the second control message at a corresponding position based on the first control message.

Further, the apparatus 1100 may further include a processing module 1130. After receiving the first control message, the processing module 1130 adjusts a periodicity for detecting downlink control information.

Further, after receiving the second control message, the processing module 1130 adjusts a quantity of sub-bands on which the downlink control information is detected.

For example, after receiving the first control message, the UE increases the periodicity for detecting downlink control information. After receiving the second control message, the UE decreases the quantity of sub-bands on which the downlink control information is detected.

Further, the processing module 1130 is further configured to process received data and to-be-sent data, and the sending module is configured to send data.

Based on a same inventive concept, an embodiment of this application further provides a communications apparatus 1200. FIG. 12 is a possible schematic structural diagram of the network device or the terminal device (for example, the base station or the UE) in the foregoing method embodiments. The apparatus 1200 may include a transceiver 1201. The transceiver 1201 may further include a receiver and a transmitter.

The transceiver 1201 is configured to send or receive a first control message/second control message. The transceiver 1201 may be further configured to receive or send data. The first control message carries a transmission bandwidth indication field, where the transmission bandwidth indication field is a first value, and the first value indicates that a current transmission bandwidth indication is an invalid indication. The second control message carries the transmission bandwidth indication field, where the transmission bandwidth indication field is a second value, and the second value indicates an actual transmission bandwidth.

It should be understood that, in some embodiments, the transceiver 1201 may include the transmitter and the receiver. In another embodiment, the transmitter and the receiver may alternatively be independent of each other.

Further, the apparatus 1200 may further include a processor 1202, a memory 1203, and a communications unit 1204. The transceiver 1201, the processor 1202, the memory 1203, and the communications unit 1204 are connected by using a bus.

On a downlink, to-be-sent data (for example, a PDSCH) or to-be-sent signaling (for example, a PDCCH) is adjusted by the transceiver 1201 to output a sample and generate a downlink signal. The downlink signal is transmitted to the terminal device in the foregoing embodiments by using an antenna. On an uplink, the antenna receives an uplink signal transmitted by the terminal device in the foregoing embodiments. The transceiver 1201 adjusts the signal received from the antenna, and provides an input sample. The processor 1202 processes service data and a signaling message, for example, modulates to-be-sent data and generates an SC-FDMA symbol. These units perform processing based on a radio access technology (for example, an access technology in an LTE system, a 5G system, or another evolved system) used by a radio access network.

The processor 1202 is further configured to control and manage the apparatus 1200, to perform processing performed by the base station or the UE in the foregoing method embodiments. Specifically, the processor 1202 is configured to process received information and to-be-sent information. For example, the processor 1202 is configured to support the apparatus 1200 in performing the processing process of the apparatus 1200 in FIG. 3 to FIG. 9. When the apparatus 1200 is applied to an unlicensed scenario, the processor 1202 further needs to control the apparatus 1200 to perform channel listening, to perform data transmission or signaling transmission. For example, the processor 1202 performs the channel listening by using a signal received by the transceiver 1201 from a transceiver apparatus or the antenna, and controls the signal to be transmitted by using the antenna, to preempt a channel. In different embodiments, the processor 1202 may include one or more processors, for example, include one or more central processing units (Central Processing Unit, CPU). The processor 1202 may be integrated into a chip, or may be a chip.

The memory 1203 is configured to store related instructions and data, and program code and data that are of the apparatus 1200. In different embodiments, the memory 1203 includes but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM). In this embodiment, the memory 1203 is independent of the processor 1202. In another embodiment, the memory 1203 may alternatively be integrated into the processor 1202.

It should be noted that the apparatus 1200 shown in FIG. 12 may be configured to perform the method performed by the base station or the UE in the foregoing method embodiments. For implementations and technical effects that are not described in detail in the apparatus 1200 shown in FIG. 12, refer to the related descriptions in the foregoing method embodiments.

It may be understood that FIG. 12 shows only a simplified design of the network device or the terminal device. In different embodiments, the network device or the terminal device may include any quantity of transmitters, receivers, processors, memories, and the like, and all network devices or terminal devices that can implement this application fall within the protection scope of this application.

An example not being part of the present invention but useful for understanding the present invention provides a communications system. The communications system includes a network device or a terminal device. The network device may be the communications apparatus shown in FIG. 10 or the apparatus shown in FIG. 12. The terminal device may be the communications apparatus shown in FIG. 11 or the apparatus shown in FIG. 12.

Based on a same inventive concept, an embodiment of this application further provides a computer program product. The computer program product includes computer program code. When the computer program code is run on a computer, the computer is enabled to perform the methods in the embodiments shown in FIG. 3 to FIG. 9.

Based on a same inventive concept, an embodiment of this application further provides a computer-readable medium. The computer-readable medium stores program code. When the program code is run on a computer, the computer is enabled to perform the methods in the embodiments shown in FIG. 3 to FIG. 9.

Based on a same inventive concept, an example not being part of the present invention but useful for understanding the present invention further provides a chip. The chip may be a processor, configured to implement the methods in the foregoing method embodiments. Further, the chip is connected to a memory, and is configured to read and execute a software program stored in the memory, to implement the methods in the embodiments shown in FIG. 3 to FIG. 9.

Based on a same inventive concept, example not being part of the present invention but useful for understanding the present invention of this application provides a chip. The chip includes a processor and a memory, and the processor is configured to read a software program stored in the memory, to implement the methods in the embodiments shown in FIG. 3 to FIG. 9.

An example not being part of the present invention but useful for understanding the present invention further provides a control information transmission method. The method includes the following steps: A terminal device receives a third control message, where the third control message carries an available bandwidth indication field, the available bandwidth indication field is a first value, and the first value indicates that a current available bandwidth indication is an invalid indication. The third control message indicates channel occupancy time COT duration, and a fourth resource is located in the COT duration, where a defaulted or indicated channel access manner corresponding to the fourth resource is a first channel access manner. The terminal device obtains the fourth resource in a second channel access manner.

In a possible design, the COT duration includes at least one or more resources used for PUSCH transmission. Optionally, the fourth resource is a resource used for PUSCH transmission or an uplink resource.

In a possible design, a base station notifies UE of all sub-bands (generally, all sub-bands in one BWP or all sub-bands in one carrier) are unavailable sub-bands, Where all the sub-bands includes a sub-band corresponding to a GC-PDCCH or on which a GC-PDCCH is transmitted. The base station may notify the UE that all the sub-bands are unavailable sub-bands by using the available bandwidth indication field being the first value (an invalid value). For example, the first value (the invalid value) may be represented by using the available bandwidth indication field that is all 0s or all 1s in the GC-PDCCH.

In a possible design, the third control message is a group common-physical downlink control channel GC-PDCCH.

In a possible design, a channel access manner may include CAT 1 LBT, CAT 2 LBT, CAT 4 LBT, a Type 1 channel access procedure, a Type 2 channel access procedure, or the like. Optionally, the first channel access manner may include the CAT 4 LBT and the Type 1 channel access procedure. The second channel access manner may include the CAT 1 LBT, the CAT 2 LBT, the Type 2 channel access procedure (or a Type 2A, 2B, or 2C channel access procedure), or the like.

In a possible design, the fourth resource includes one or more sub-bands, and the one or more sub-bands include a sub-band corresponding to the third control message.

In a possible design, the one or more sub-bands are one or more adjacent sub-bands, or are located in one carrier, located in a plurality of carriers, located in one BWP, or located in a plurality of BWPs. The plurality of carriers may be a plurality of consecutive carriers or a plurality of adjacent carriers. The plurality of BWPs may be a plurality of consecutive BWPs or a plurality of adjacent BWPs.

The following further describes this example with reference to the accompanying drawings.

The UE determines, based on the third control message sent by the base station, whether a scheduled PUSCH resource or a preconfigured PUSCH resource is located in the COT. The third control message may be the group common-physical downlink control channel GC-PDCCH. For a PUSCH resource located in the COT, the UE may adjust a channel access type before sending a PUSCH. For example, the Type 1 channel access procedure is adjusted to the Type 2 channel access procedure, or a CAT 4 LBT manner is adjusted to a CAT 2 LBT manner. In a possible implementation, the UE may learn, based on an available bandwidth indication (or referred to as an available RB set indicator) in the third control message, of specific sub-bands/LBT bandwidths/RB sets on which the UE may receive downlink data or send uplink data, and the UE determines, by using COT duration (COT duration) or a slot format indicator (Slot format indicator), a period of time that is after the GC-PDCCH is received and in which these sub-bands/bandwidth/RB sets may be continuously available.

The base station schedules, for the UE in advance, a time-frequency resource for the PUSCH transmission, and sends scheduling information to the UE at least K2 symbols in advance before the PUSCH transmission. In this case, the base station may not determine whether a scheduled PUSCH resource is in a COT subsequently obtained by the base station. Therefore, the base station indicates the UE to use the Type 1 channel access procedure or the CAT 4 LBT. For example, the base station may also send the indication information when sending the scheduling information about the PUSCH transmission resource. When preparing to send the PUSCH based on the scheduling information, the UE may determine, based on an available bandwidth indication carried in the received GC-PDCCH and the COT duration, whether the resource used for the PUSCH transmission is located in the COT obtained by the base station. When the resource used for the PUSCH transmission is in the COT (for example, on an available sub-band indicated by the GC-PDCCH and in the COT duration), the UE may perform channel listening based on the Type 2A, Type 2B, or Type 2C channel access procedure, or perform the CAT 2 LBT or the CAT 1 LBT. The UE does not need to perform the channel listening based on the Type 1 channel access procedure (the CAT 4 LBT) indicated in uplink scheduling.

FIG. 13 is a schematic diagram of a method for adjusting a channel access manner. As shown in FIG. 13, a GC-PDCCH in FIG. 13 may indicate that a sub-band 1 and a sub-band 2 are available sub-bands (or belong to an available RB set). The GC-PDCCH may also indicate that a sub-band 3 and a sub-band 4 are unavailable sub-bands (where for example, downlink data cannot be received or data is not received on the sub-band 3/sub-band 4). COT duration starts from a moment when GC-PDCCH transmission ends to a moment when uplink ends. When scheduling a PUSCH, a base station indicates UE to use CAT 4 LBT. However, based on the method provided above, the UE may use CAT 2 LBT on the sub-band 1 and/or the sub-band 2, and use the CAT 4 LBT on the sub-band 3 and/or the sub-band 4.

An available bandwidth indication in the GC-PDCCH is an invalid value (which may be indicated by a first value), but COT duration or an SFI in the GC-PDCCH is valid. The UE may change a channel access type only on a sub-band on which the GC-PDCCH is received. No channel access type is changed on another sub-band on which the GC-PDCCH is not received.

FIG. 14 is a schematic diagram of a method for adjusting a channel access manner. As shown in FIG. 14, UE performs channel listening based on CAT 2 LBT only on a PUSCH #1 on an uplink sub-band 1. CAT 4 LBT is used on another sub-band. If the UE receives a GC-PDCCH on a plurality of sub-bands, the UE may change a channel access manner on all the sub-bands.

In another embodiment, an available bandwidth indication in the GC-PDCCH is an invalid value (which may be indicated by a first value), but COT duration or an SFI in the GC-PDCCH is valid. The UE receives a downlink channel or a downlink signal, for example, a PDCCH, a PDSCH, a DMRS, a CSI-RS, an SS/PBCH block, or a TRS, on another sub-band. The UE may change a type of an uplink channel access procedure on an uplink sub-band corresponding to the received downlink channel or downlink signal.

FIG. 15 is a schematic diagram of a method for adjusting a channel access manner. As shown in FIG. 15, UE receives a downlink signal on a sub-band 2. In this case, before performing PUSCH transmission, the UE may adjust CAT 4 LBT to CAT 2 LBT. Further, an interval between a sub-band on which a downlink channel and a downlink signal are received and a sub-band on which a GC-PDCCH is received needs to be within a specific range. For example, the sub-bands may be one or more adjacent sub-bands, or may be in one carrier or BWP or in a plurality of consecutive carriers or BWPs. If the UE receives a GC-PDCCH carrying a radio bandwidth on a plurality of sub-bands, the channel access manner may be changed (where the CAT 4 LBT is changed to the CAT 2 LBT) on both these sub-bands and a sub-band that is spaced within a specific range from these sub-bands.

When the UE is configured with a scheduling-free PUSCH resource (or may be referred to as a Configured Grant, grant free, or autonomous uplink resource), by default, the UE needs to perform the CAT 4 LBT (a Type 1 channel access procedure) before sending these PUSCHs. When determining, by using an available bandwidth indication and COT information that are in the GC-PDCCH, that a PUSCH resource is in a COT, the UE may use the CAT 2 LBT (a Type 2A and a Type 2B) or CAT 1 LBT (a Type 2C) before performing the PUSCH transmission. In other words, the UE does not need to perform channel access based on the default CAT 4 LBT, but adjusts to perform channel access based on the CAT 2 LBT or the CAT 1 LBT.

It should be noted that the foregoing "adjustment" of the channel access manner may mean that a default channel access manner is changed to another channel access manner, or an originally indicated channel access manner is changed to another access manner. The originally indicated channel access manner may be indicated by a base station in a UL grant. A sub-band in which a channel access manner is "adjusted" may be one or more sub-bands. The sub-bands in FIG. 13 to FIG. 15 are merely examples, and a quantity of sub-bands or a bandwidth value may be adjusted based on an actual situation. An available bandwidth may alternatively be one or more sub-bands.

In this embodiment of this application, for the PUSCH transmission or uplink data transmission, the channel access manner is "adjusted" from a first channel access manner to a second channel access manner. When transmitting one or more PUSCHs, the UE may consider adjusting a channel access manner of the one or more PUSCHs. For example, channel access manners of the PUSCH #1 and PUSCH #2 in the PUSCH #1 to PUSCH #4 in FIG. 13 are "adjusted".

It should be understood that, in FIG. 13 to FIG. 15, bandwidth values of sub-bands used for uplink data transmission and downlink data transmission are the same. Therefore, an uplink sub-band and a downlink sub-band are not differentiated. In a possible design, a sub-band may include an uplink sub-band used for the uplink data transmission and a downlink sub-band used for the downlink data transmission. A bandwidth of each uplink sub-band may be flexibly configured, and does not need to be consistent with a bandwidth of the downlink sub-band. A PUSCH is carried on one or more uplink sub-bands, and one uplink sub-band may correspond to one or more downlink sub-bands. In this case, one PUSCH may correspond to one or more downlink sub-bands. Similarly, one downlink sub-band may correspond to one or more uplink sub-bands, or correspond to one or more PUSCHs. The sub-band 1 in FIG. 13 may be understood as an uplink sub-band, or may be understood as a downlink sub-band. The GC-PDCCH corresponds to the sub-band 1, and the PUSCH #1 also corresponds to the sub-band 1. In this case, the channel access manner of the PUSCH #1 may be "adjusted". Similarly, how the channel access manners of other PUSCHs should be "adjusted" may be obtained. That is, the sub-bands are classified into the uplink sub-band and the downlink sub-band. The bandwidth of the uplink sub-band and the bandwidth of the downlink sub-band may be inconsistent. When the channel access manner is "adjusted", as long as a frequency of the uplink sub-band and a frequency of a corresponding downlink sub-band are consistent, or a frequency domain resource of the uplink sub-band or a frequency domain resource of an uplink PUSCH is located in a frequency domain resource corresponding to the downlink sub-band, the adjustment may be performed.

By "adjusting" the channel access manner, the UE may use a more appropriate channel access manner when performing the PUSCH transmission, instead of performing channel access according to a default channel access manner or an originally configured channel access manner. When the available bandwidth indication in the GC-PDCCH is an invalid value, the UE may more freely "adjust" the channel access manner. For example, when the CAT 4 LBT is adjusted to the CAT 2 LBT, the UE may complete LBT in a shorter time or with more limited resources.

In this embodiment, for the concept and the method that are the same as or similar to those in the foregoing embodiments, refer to the foregoing embodiments. Details are not described herein again. Correspondingly, a related part of the method provided in this embodiment of this application may be performed by the foregoing apparatus 1000, the apparatus 1100, and the apparatus 1200. Details are not described herein again.

Based on a same inventive concept, an example not being part of the present invention but useful for understanding the present invention of this application further provides a computer program product. The computer program product includes computer program code. When the computer program code is run on a computer, the computer is enabled to perform the method according to any one of the foregoing embodiments or the embodiments shown in FIG. 13 to FIG. 15.

Based on a same inventive concept, an embodiment of this application further provides a computer-readable medium. The computer-readable medium stores program code. When the program code is run on a computer, the computer is enabled to perform the method according to any one of the foregoing embodiments or the embodiments shown in FIG. 13 to FIG. 15.

Based on a same inventive concept, an example not being part of the present invention but useful for understanding the present invention of this application further provides a chip. The chip may be a processor, configured to implement the methods in the foregoing method embodiments. Further, the chip is connected to a memory, and is configured to read and execute a software program stored in the memory, to implement the method according to any one of the foregoing embodiments or the embodiments shown in FIG. 13 to FIG. 15.

Based on a same inventive concept, an example not being part of the present invention but useful for understanding the present invention of this application provides a chip. The chip includes a processor and a memory, and the processor is configured to read a software program stored in the memory, to implement the method according to any one of the foregoing embodiments or the embodiments shown in FIG. 13 to FIG. 15.

The chip may further include a communications interface, configured to receive and send a related signal or related data.

In the embodiments of this application, it should be noted that the foregoing method embodiments in the embodiments of this application may be applied to a processor, or may be implemented by a processor. The processor may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (Field programmable gate array, FPGA) or another programmable logic device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor, or the like. Steps of the methods disclosed with reference to the embodiments of this application may be directly performed and completed by using a hardware decoding processor, or may be performed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that sequence numbers of the foregoing processes do not indicate an execution sequence in the various embodiments of this application. The execution sequence of the processes should be determined based on functions and internal logic of the processes, and should not be construed as any limitation on the implementation processes of the embodiments of this application.

The terms "first", "second", and the like in this application are merely used to distinguish different objects, and "first" and "second" do not limit an actual sequence or functions of the objects modified by "first" and "second". Any embodiment or design solution described as "example", "for example", "such as", "optionally", or "in some implementations" in this application should not be construed as being more preferred or more advantageous than another embodiment or design solution. Specifically, the use of these words is intended to present related concepts in a specific manner.

Names may be assigned to various objects that may appear in this application, for example, various messages/information/devices/network elements/systems/apparatuses/operations. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

All or some of the foregoing embodiments may be implemented by using software, hardware, firmware, or any combination thereof. When the embodiments are implemented by using the software, all or some of the embodiments may be implemented in a form of a computer program product. The computer program product may include one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid state drive, SSD)), or the like.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

**1.** A control information transmission method, comprising:

receiving, by a terminal device, a first control message on a first resource, wherein the first control message carries a transmission bandwidth indication field, the transmission bandwidth indication field is a first value, and the first value indicates that a current transmission bandwidth indication is an invalid indication;
receiving, by the terminal device, a second control message on a second resource, wherein the second control message carries the transmission bandwidth indication field, the transmission bandwidth indication field is a second value, and the second value indicates an actual transmission bandwidth, wherein
the first resource and the second resource are in a same channel occupancy time COT; and
transmitting, by the terminal device, data on the actual transmission bandwidth.

**2.** The method according to claim 1, wherein
the first control message and the second control message are group common-physical downlink control channels GC-PDCCHs.

**3.** The method according to claim 1 or 2, wherein the method further comprises:
after receiving the first control message, increasing, by the terminal device, a periodicity for detecting downlink control information.

**4.** The method according to any one of claims 1 to 3, wherein the method further comprises:
after receiving the second control message, adjusting, by the terminal device, a quantity of sub-bands on which the downlink control information is detected.

5. The method according to any one of claims 1 to 4, wherein the method further comprises:
receiving, by the terminal device, data on a third resource, wherein an interval between the third resource and the second resource is at least one time unit.

6. The method according to any one of claims 1 to 5, wherein
the first control message carries information about the second resource.

7. A control information transmission method, comprising:

sending, by a network device, a first control message to a terminal device on a first resource, wherein the first control message carries a transmission bandwidth indication field, the transmission bandwidth indication field is a first value, and the first value indicates that a current transmission bandwidth indication is an invalid indication;
sending, by the network device, a second control message to the terminal device on a second resource, wherein the second control message carries the transmission bandwidth indication field, the transmission bandwidth indication field is a second value, and the second value indicates an actual transmission bandwidth, wherein the first resource and the second resource are in a same channel occupancy time COT; and
transmitting, by the network device, data with the terminal device on the actual transmission bandwidth.

8. The method according to claim 7, wherein
the first control message and the second control message are group common-physical downlink control channels GC-PDCCHs.

9. The method according to claim 7 or 8, wherein
the first control message carries information about the second resource.

10. The method according to any one of claims 7 to 9, wherein the method further comprises:
sending, by the network device, data to the terminal device on a third resource, wherein an interval between the third resource and the second resource is at least one time unit.

11. A computer-readable storage medium having program code stored thereon which, when run on a computer, causes the computer to perform the method according to any one of claims 1 to 6 or any one of claims 7 to 10.

12. A communications apparatus, comprising:
a processor and a memory, wherein the processor is configured to execute instructions stored in the memory to perform the method according to any one of claims 1 to 6 or the method according to any one of claims 7 to 10.

**Patentansprüche**

1. Verfahren zur Übertragung von Steuerungsinformationen, das Folgendes umfasst:

Empfangen, durch eine Endgerätvorrichtung, einer ersten Steuerungsnachricht auf einer ersten Ressource, wobei die erste Steuerungsnachricht ein Übertragungsbandbreitenanzeigefeld trägt, wobei das Übertragungsbandbreitenanzeigefeld ein erster Wert ist und wobei der erste Wert anzeigt, dass eine aktuelle Übertragungsbandbreitenanzeige eine ungültige Anzeige ist;
Empfangen, durch die Endgerätvorrichtung, einer zweiten Steuerungsnachricht auf einer zweiten Ressource, wobei die zweite Steuerungsnachricht das Übertragungsbandbreitenanzeigefeld trägt, das Übertragungsbandbreitenanzeigefeld ein zweiter Wert ist und der zweite Wert eine tatsächliche Übertragungsbandbreite anzeigt, wobei
die erste Ressource und die zweite Ressource in einer gleichen Kanalbelegungszeit, COT, sind; und
Übertragen, durch die Endgerätvorrichtung, von Daten auf der tatsächlichen Übertragungsbandbreite.

2. Verfahren nach Anspruch 1, wobei:
die erste Steuerungsnachricht und die zweite Steuerungsnachricht gruppengemeinsame physische Downlink-Steuerkanäle, GC-PDCCHs, sind.

3. Verfahren nach Anspruch 1 oder 2, wobei das Verfahren ferner Folgendes umfasst:
nach Empfangen der ersten Steuerungsnachricht, Erhöhen, durch die Endgerätvorrichtung, einer Periodizität zum Detektieren von Downlink-Steuerungsinformationen.

4. Verfahren nach einem der Ansprüche 1 bis 3, wobei das Verfahren ferner Folgendes umfasst:
nach Empfangen der zweiten Steuerungsnachricht, Anpassen, durch die Endgerätvorrichtung, einer Quantität von Teilbändern, auf denen die Downlink-Steuerungsinformationen detektiert werden.

5. Verfahren nach einem der Ansprüche 1 bis 4, wobei das Verfahren ferner Folgendes umfasst:
Empfangen, durch die Endgerätvorrichtung, von Daten auf einer dritten Ressource, wobei ein Intervall zwischen der dritten Ressource und der zweiten Ressource mindestens eine Zeiteinheit ist.

6. Verfahren nach einem der Ansprüche 1 bis 5, wobei
die erste Steuerungsnachricht Informationen über die zweite Ressource trägt.

7. Verfahren zur Übertragung von Steuerungsinformationen, das Folgendes umfasst:

Senden, durch eine Netzwerkvorrichtung, einer ersten Steuerungsnachricht an eine Endgerätvorrichtung auf einer ersten Ressource, wobei die erste Steuerungsnachricht ein Übertragungsbandbreitenanzeigefeld trägt, wobei das Übertragungsbandbreitenanzeigefeld ein erster Wert ist, und wobei der erste Wert anzeigt, dass eine aktuelle Übertragungsbandbreitenanzeige eine ungültige Anzeige ist;
Senden, durch die Netzwerkvorrichtung, einer zweiten Steuerungsnachricht an die Endgerätvorrichtung auf einer zweiten Ressource, wobei die zweite Steuerungsnachricht das Übertragungsbandbreitenanzeigefeld trägt, wobei das Übertragungsbandbreitenanzeigefeld ein zweiter Wert ist, und wobei der zweite Wert eine tatsächliche Übertragungsbandbreite anzeigt, wobei
die erste Ressource und die zweite Ressource in einer gleichen Kanalbelegungszeit, COT, sind; und
Übertragen, durch die Netzwerkvorrichtung, von Daten mit der Endgerätvorrichtung auf der tatsächlichen Übertragungsbandbreite.

8. Verfahren nach Anspruch 7, wobei:
die erste Steuerungsnachricht und die zweite Steuerungsnachricht gruppengemeinsame physische Downlink-Steuerkanäle, GC-PDCCHs, sind.

9. Verfahren nach Anspruch 7 oder 8, wobei:
die erste Steuerungsnachricht Informationen über die zweite Ressource trägt.

10. Verfahren nach einem der Ansprüche 7 bis 9, wobei das Verfahren ferner Folgendes umfasst:
Senden, durch die Netzwerkvorrichtung, von Daten an die Endgerätvorrichtung auf einer dritten Ressource, wobei ein Intervall zwischen der dritten Ressource und der zweiten Ressource mindestens eine Zeiteinheit ist.

11. Computerlesbares Speichermedium, einen darauf gespeicherten Programmcode aufweisend, der, wenn auf einem Computer ausgeführt, den Computer veranlasst, das Verfahren nach einem der Ansprüche 1 bis 6 oder einem der Ansprüche 7 bis 10 durchzuführen.

12. Kommunikationsvorrichtung, die Folgendes umfasst:
einen Prozessor und einen Speicher, wobei der Prozessor ausgelegt ist zum Ausführen von Anweisungen, die im Speicher gespeichert sind, zum Durchführen des Verfahrens nach einem der Ansprüche 1 bis 6 oder des Verfahrens nach einem der Ansprüche 7 bis 10.

## Revendications

1. Procédé de transmission d’informations de commande, comprenant :

la réception, par un dispositif terminal, d’un premier message de commande sur une première ressource, le premier message de commande transportant un champ d’indication de largeur de bande de transmission, le champ d’indication de largeur de bande de transmission étant une première valeur, et la première valeur indiquant qu’une indication de largeur de bande de transmission actuelle est une indication non valide ;
la réception, par le dispositif terminal, d’un deuxième message de commande sur une deuxième ressource, le deuxième message de commande transportant le champ d’indication de largeur de bande de transmission, le champ d'indication de largeur de bande de transmission étant une deuxième valeur, et la deuxième valeur indiquant une largeur de bande de transmission réelle,
la première ressource et la deuxième ressource étant dans un même temps d'occupation du canal COT ; et
la transmission, par le dispositif terminal, de données sur la largeur de bande de transmission réelle.

**2.** Procédé selon la revendication 1,
le premier message de commande et le deuxième message de commande étant des canaux de commande de liaison descendante physique communs de groupe GC-PDCCH.

**3.** Procédé selon la revendication 1 ou 2, le procédé comprenant en outre :
après réception du premier message de commande, l'augmentation, par le dispositif terminal, d'une périodicité de détection d'informations de commande de liaison descendante.

**4.** Procédé selon l'une quelconque des revendications 1 à 3, le procédé comprenant en outre :
après réception du deuxième message de commande, l'ajustement, par le dispositif terminal, d'une quantité de sous-bandes sur lesquelles les informations de commande de liaison descendante sont détectées.

**5.** Procédé selon l'une quelconque des revendications 1 à 4, le procédé comprenant en outre :
la réception, par le dispositif terminal, de données sur une troisième ressource, un intervalle entre la troisième ressource et la deuxième ressource étant d'au moins une unité de temps.

**6.** Procédé selon l'une quelconque des revendications 1 à 5,
le premier message de commande transportant des informations sur la deuxième ressource.

**7.** Procédé de transmission d'informations de commande, comprenant :

l'envoi, par un dispositif de réseau, d'un premier message de commande à un dispositif terminal sur une première ressource, le premier message de commande transportant un champ d'indication de largeur de bande de transmission, le champ d'indication de largeur de bande de transmission étant une première valeur, et la première valeur indiquant qu'une indication de largeur de bande de transmission actuelle est une indication non valide ;
l'envoi, par le dispositif de réseau, d'un deuxième message de commande au dispositif terminal sur une deuxième ressource, le deuxième message de commande transportant le champ d'indication de largeur de bande de transmission, le champ d'indication de largeur de bande de transmission étant une deuxième valeur, et la deuxième valeur indiquant une largeur de bande de transmission réelle,
la première ressource et la deuxième ressource étant dans un même temps d'occupation du canal COT ; et
la transmission, par le dispositif de réseau, de données avec le dispositif terminal sur la largeur de bande de transmission réelle.

**8.** Procédé selon la revendication 7,
le premier message de commande et le deuxième message de commande étant des canaux de commande de liaison descendante physique communs de groupe GC-PDCCH.

**9.** Procédé selon la revendication 7 ou 8,
le premier message de commande transportant des informations sur la deuxième ressource.

**10.** Procédé selon l'une quelconque des revendications 7 à 9, le procédé comprenant en outre :
l'envoi, par le dispositif de réseau, de données au dispositif terminal sur une troisième ressource, un intervalle entre la troisième ressource et la deuxième ressource étant d'au moins une unité de temps.

**11.** Support de stockage lisible par ordinateur sur lequel est stocké un code de programme qui, lorsqu'il est exécuté sur un ordinateur, amène l'ordinateur à réaliser le procédé selon l'une quelconque des revendications 1 à 6 ou l'une quelconque des revendications 7 à 10.

**12.** Appareil de communication, comprenant :
un processeur et une mémoire, le processeur étant configuré pour exécuter des instructions stockées dans la mémoire afin de réaliser le procédé selon l'une quelconque des revendications 1 à 6 ou le procédé selon l'une quelconque des revendications 7 à 10.

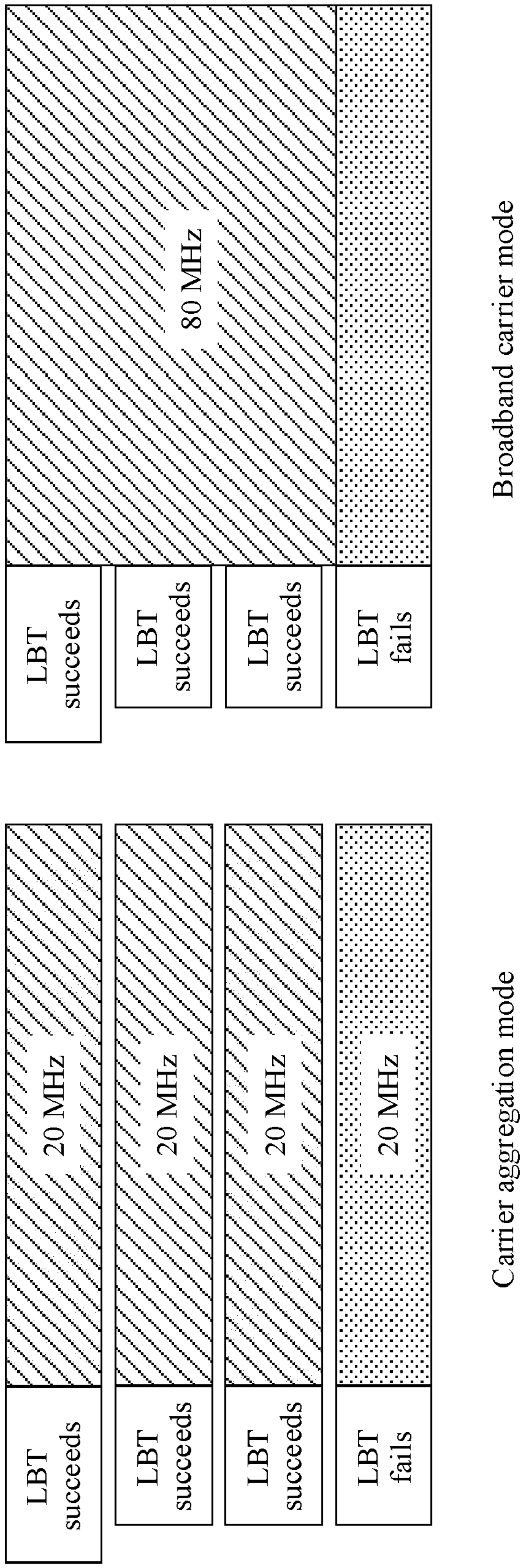


FIG. 1 (Conventional arttechnology)

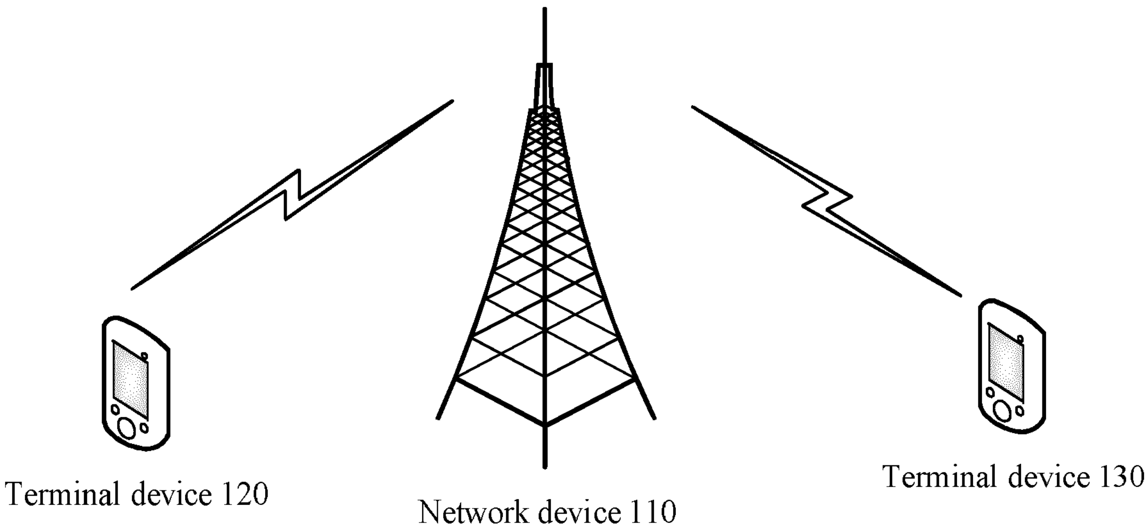
Terminal device 120
Network device 110
Terminal device 130

FIG. 2

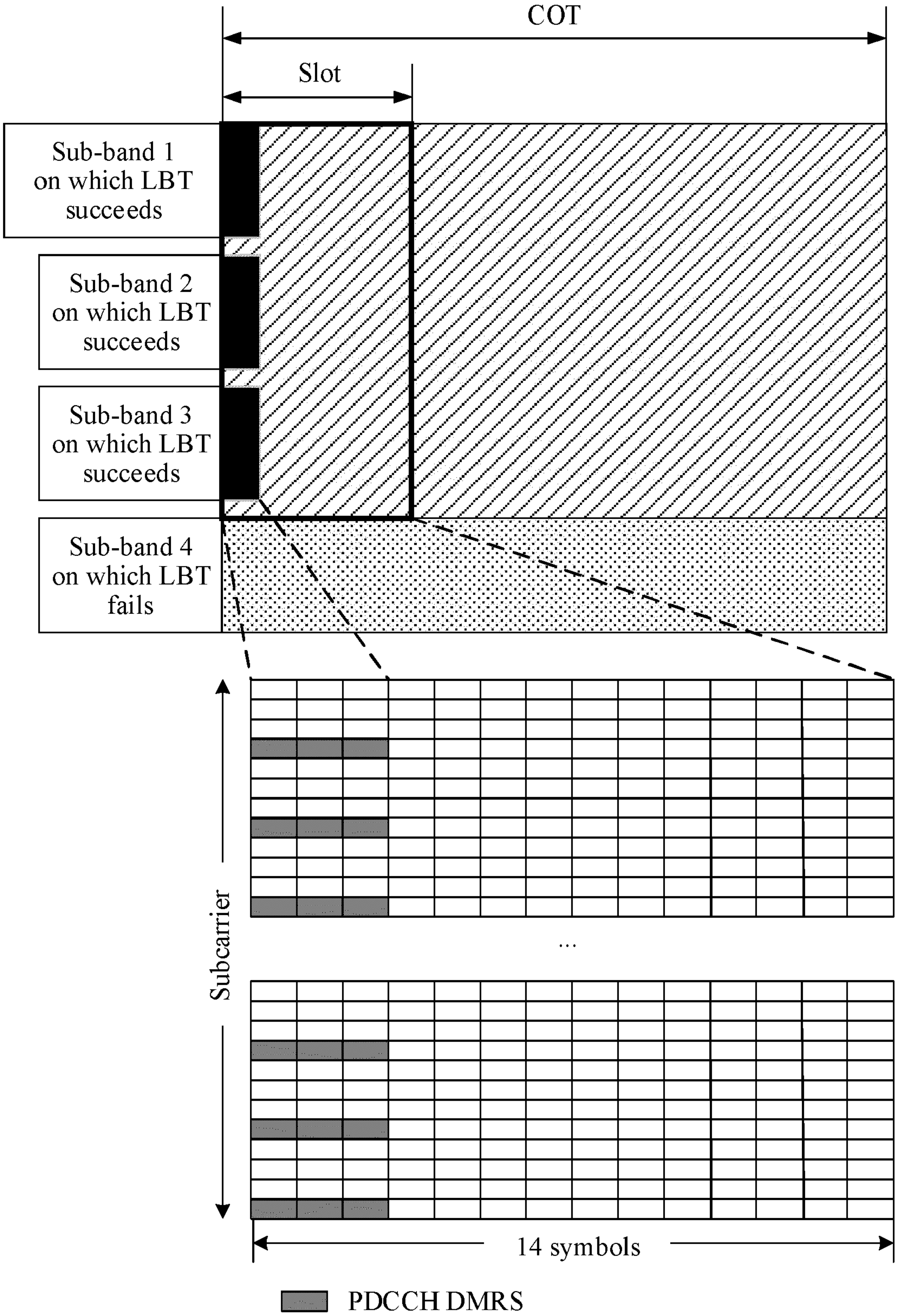
COT
Slot
Sub-band 1 on which LBT succeeds
Sub-band 2 on which LBT succeeds
Sub-band 3 on which LBT succeeds
Sub-band 4 on which LBT fails
Subcarrier
...
14 symbols
PDCCH DMRS

FIG. 3

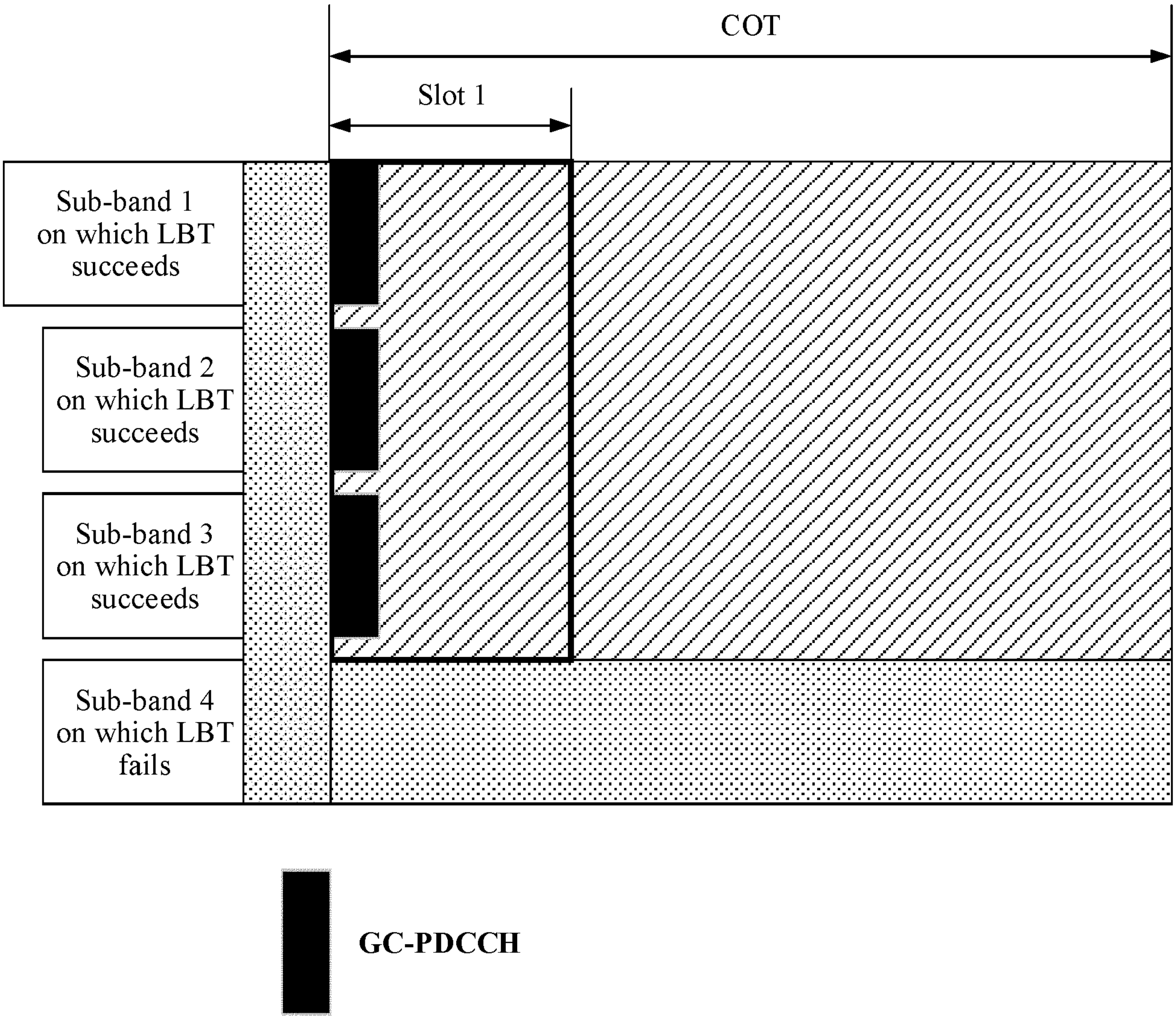
COT
Slot 1
Sub-band 1 on which LBT succeeds
Sub-band 2 on which LBT succeeds
Sub-band 3 on which LBT succeeds
Sub-band 4 on which LBT fails
GC-PDCCH

FIG. 4

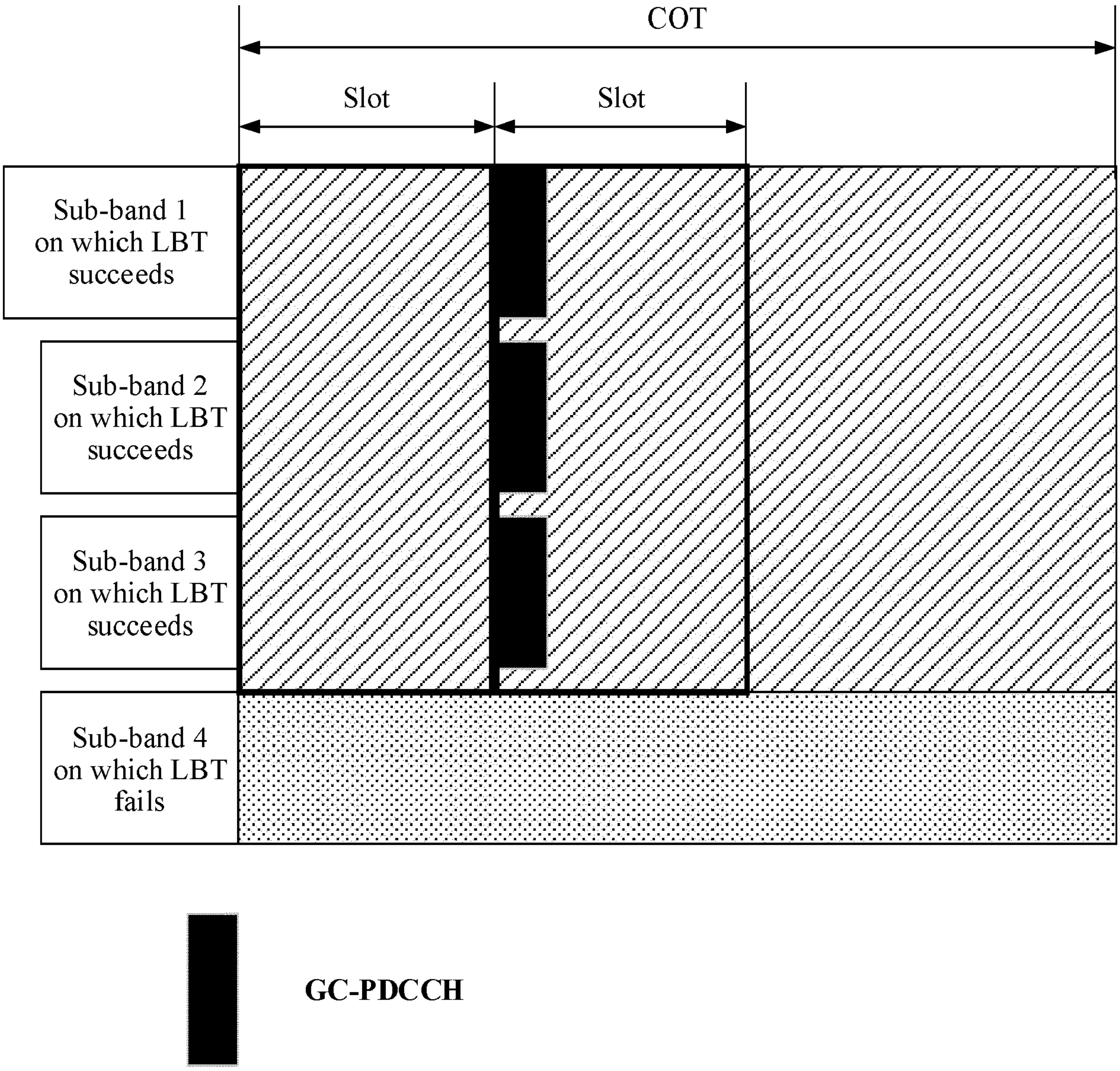
COT
Slot
Slot
Sub-band 1 on which LBT succeeds
Sub-band 2 on which LBT succeeds
Sub-band 3 on which LBT succeeds
Sub-band 4 on which LBT fails
GC-PDCCH

FIG. 5

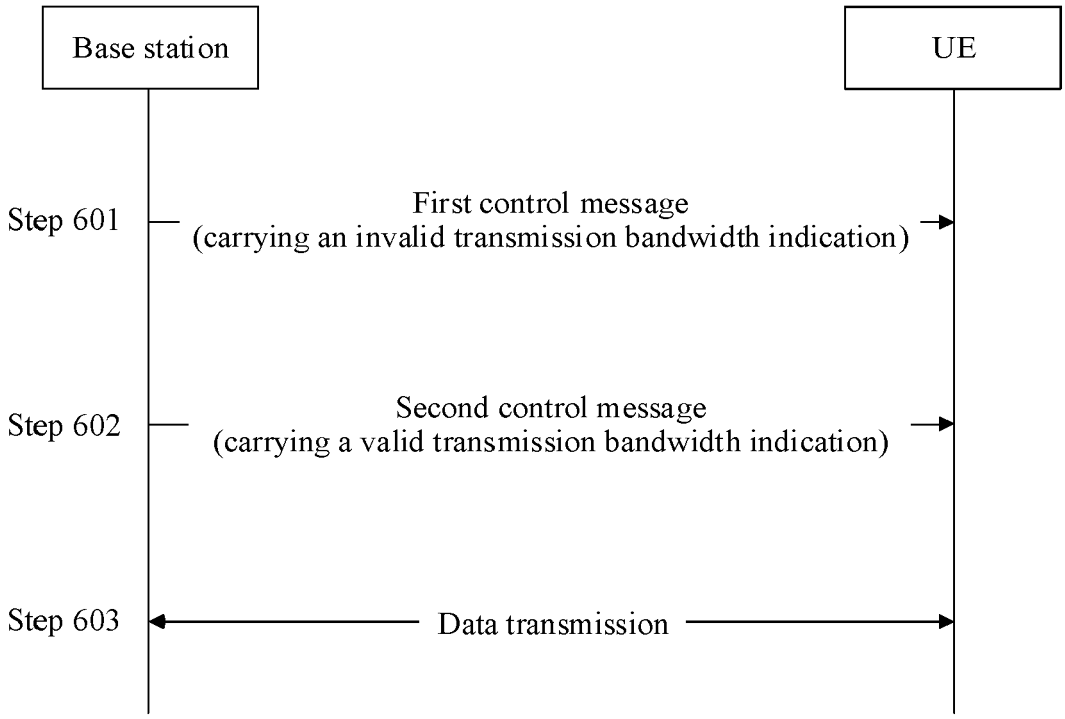
Base station
UE
Step 601
First control message
(carrying an invalid transmission bandwidth indication)
Step 602
Second control message
(carrying a valid transmission bandwidth indication)
Step 603
Data transmission

FIG. 6

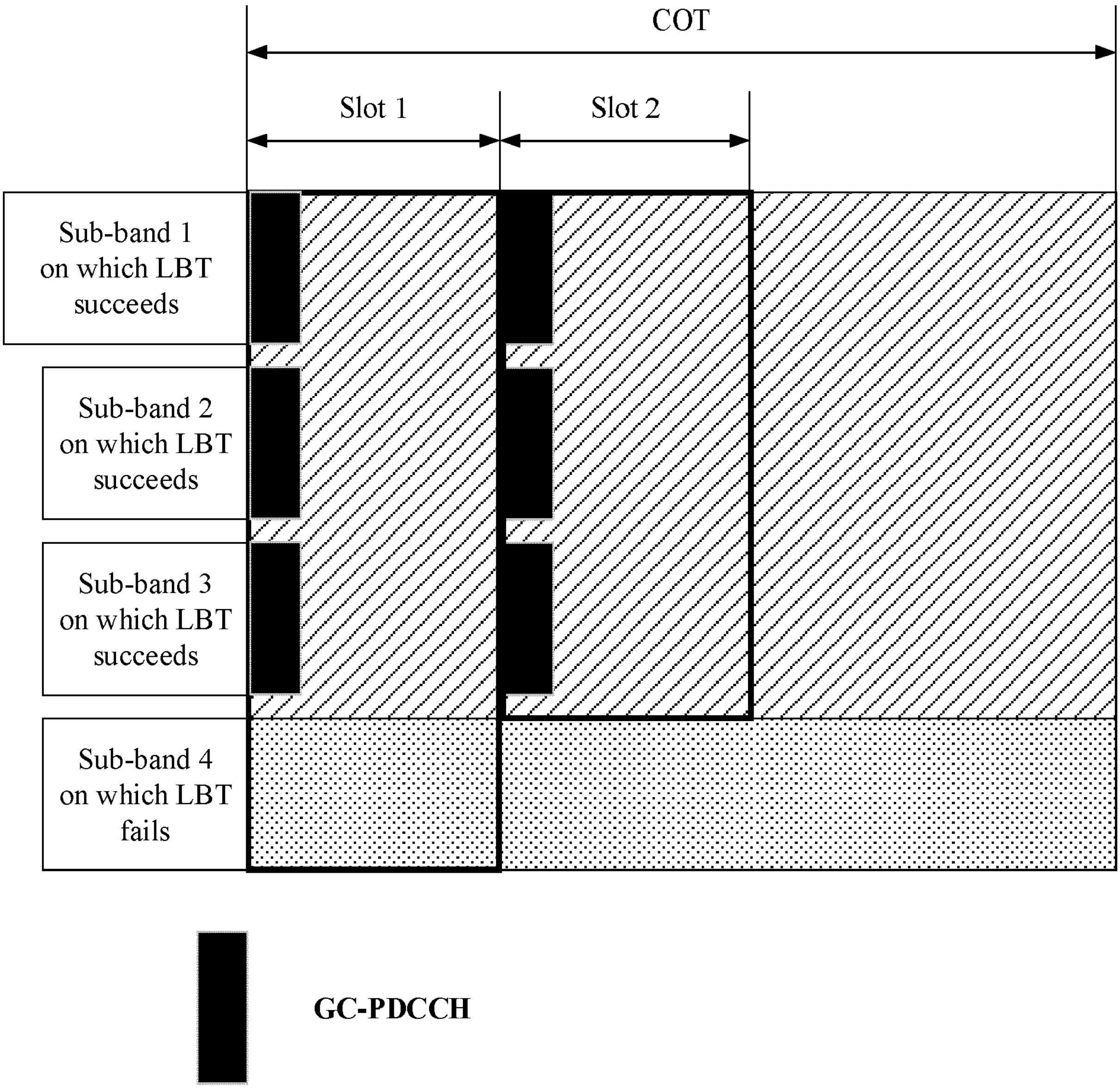
COT
Slot 1
Slot 2
Sub-band 1 on which LBT succeeds
Sub-band 2 on which LBT succeeds
Sub-band 3 on which LBT succeeds
Sub-band 4 on which LBT fails
GC-PDCCH

FIG. 7

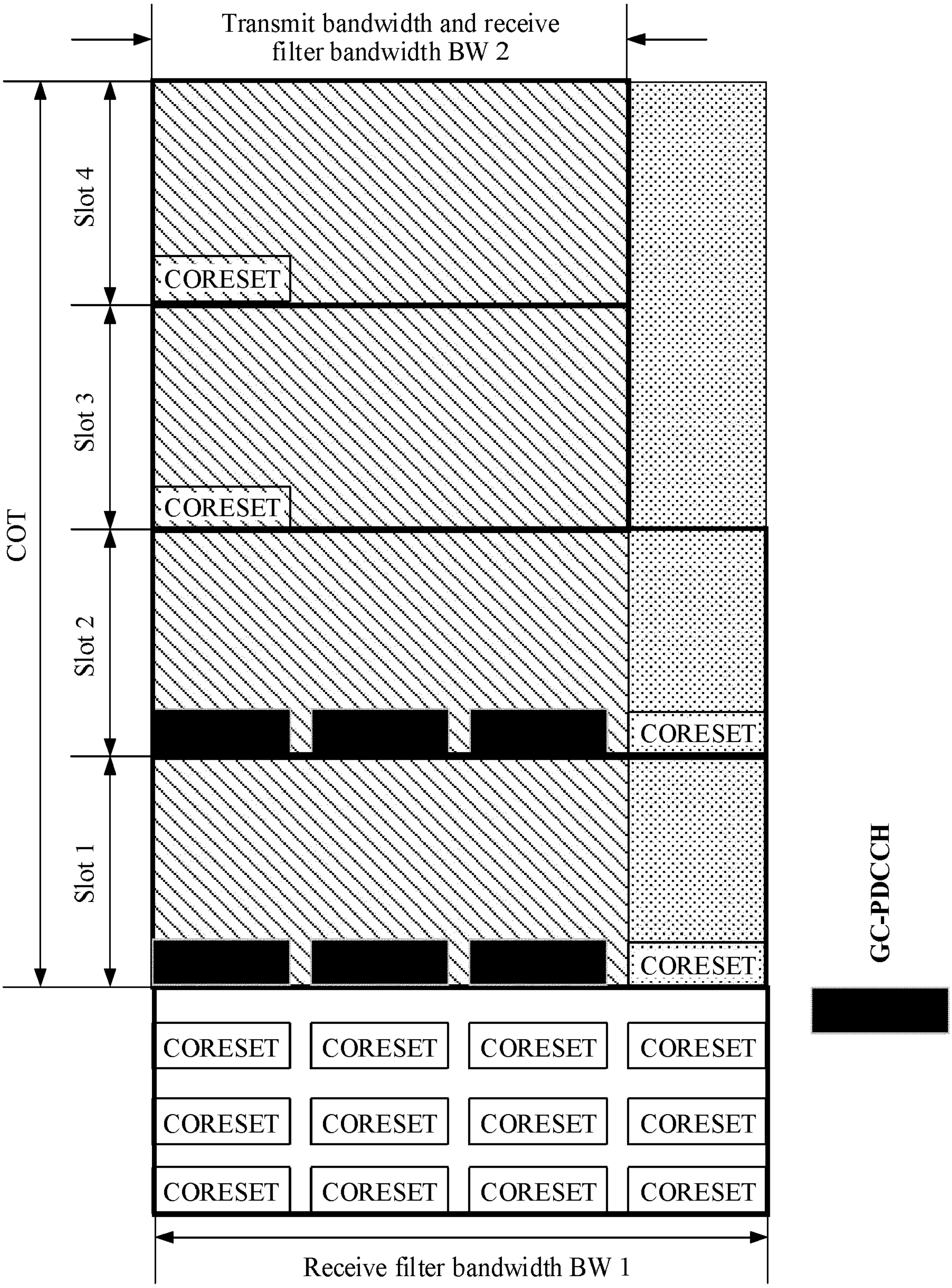
Transmit bandwidth and receive filter bandwidth BW 2
COT
Slot 4
Slot 3
Slot 2
Slot 1
CORESET
CORESET
CORESET
CORESET
CORESET
CORESET
CORESET
CORESET
CORESET
CORESET
CORESET
CORESET
CORESET
CORESET
CORESET
CORESET
CORESET
CORESET
GC-PDCCH
Receive filter bandwidth BW 1

FIG. 8

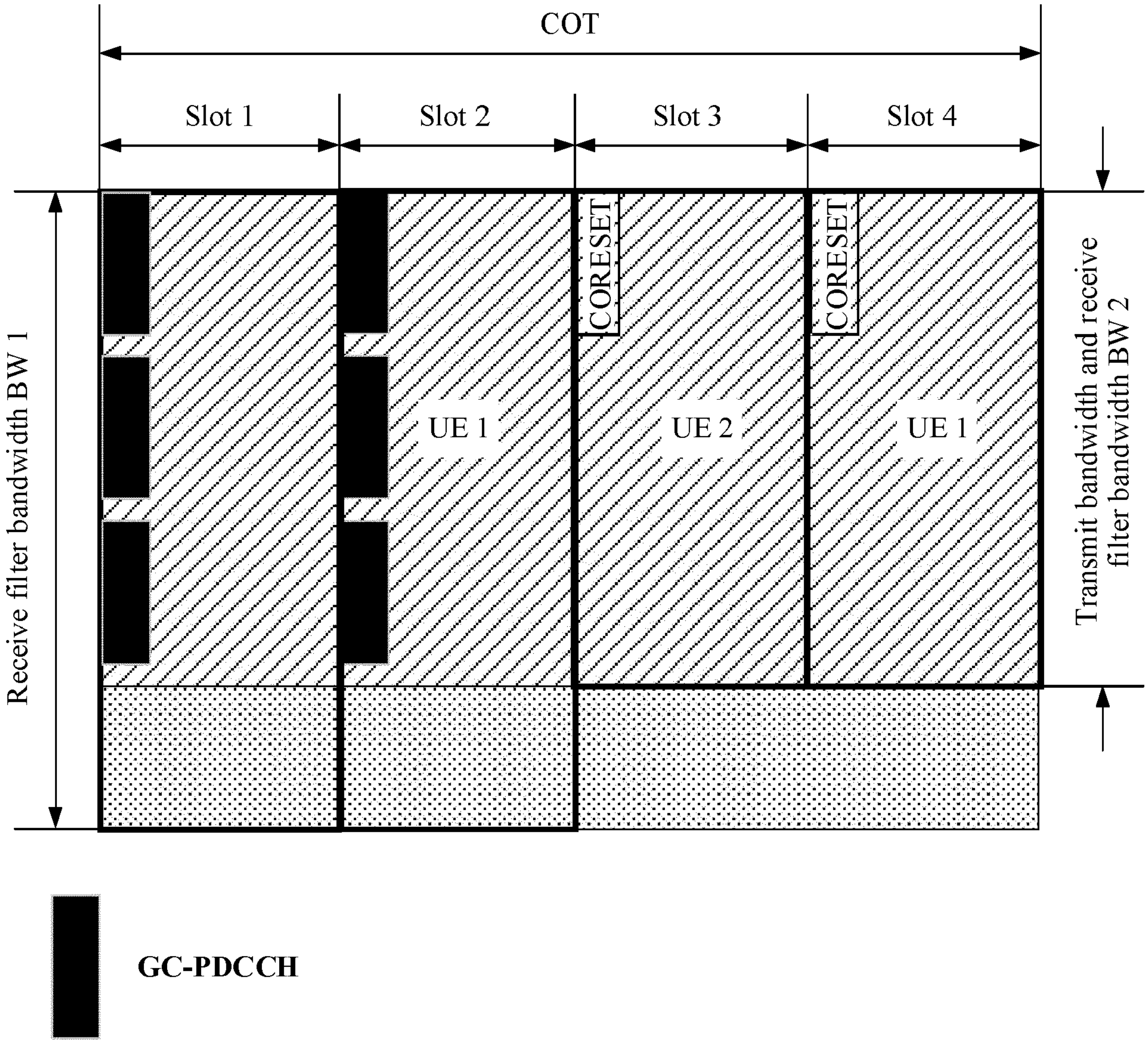
COT
Slot 1
Slot 2
Slot 3
Slot 4
Receive filter bandwidth BW 1
CORESET
CORESET
UE 1
UE 2
UE 1
Transmit bandwidth and receive filter bandwidth BW 2
GC-PDCCH

FIG. 9

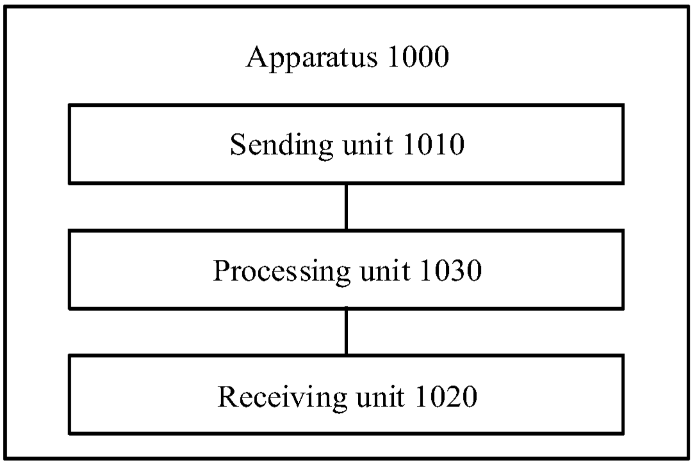
Apparatus 1000
Sending unit 1010
Processing unit 1030
Receiving unit 1020

FIG. 10

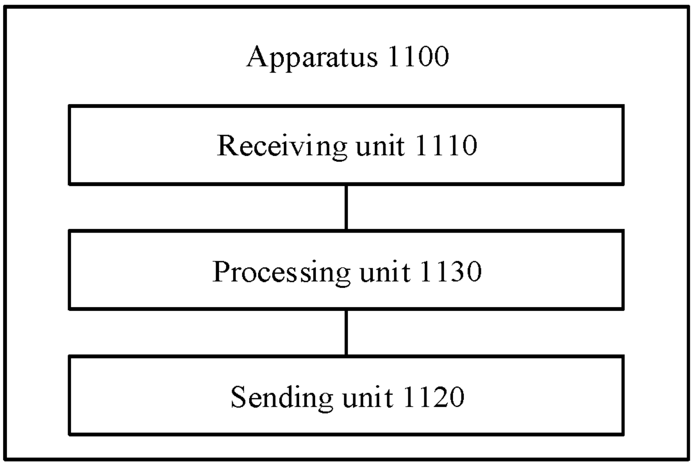
Apparatus 1100
Receiving unit 1110
Processing unit 1130
Sending unit 1120

FIG. 11

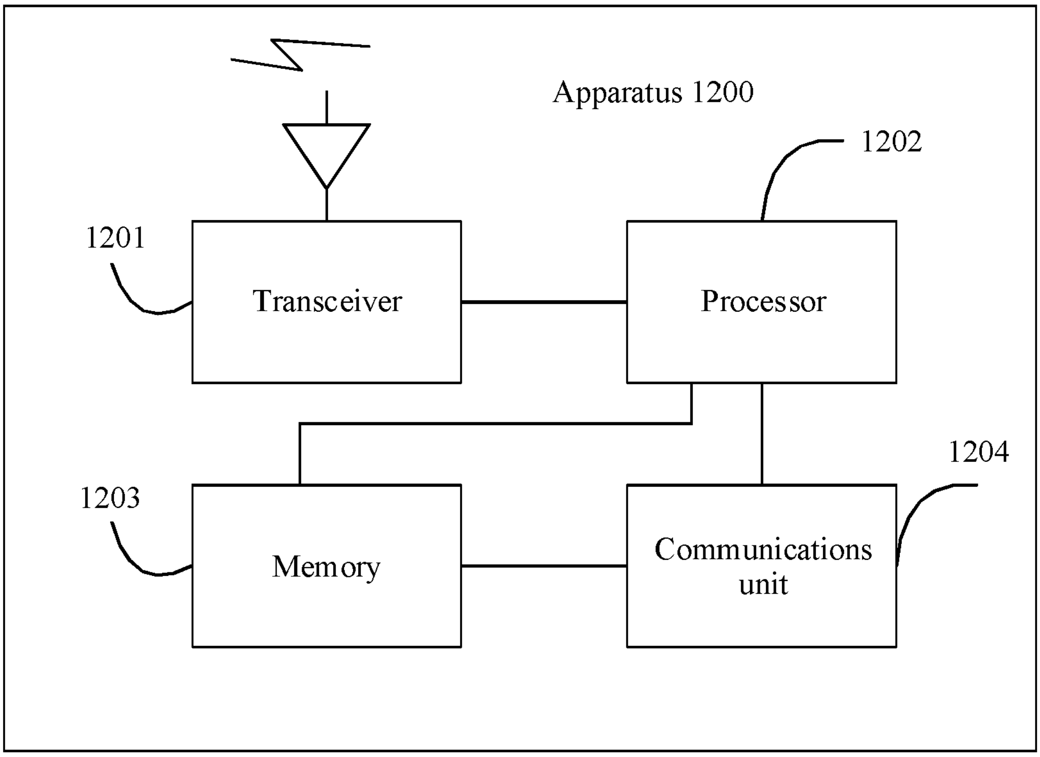
Apparatus 1200
1202
1201
Transceiver
Processor
1204
1203
Memory
Communications unit

FIG. 12

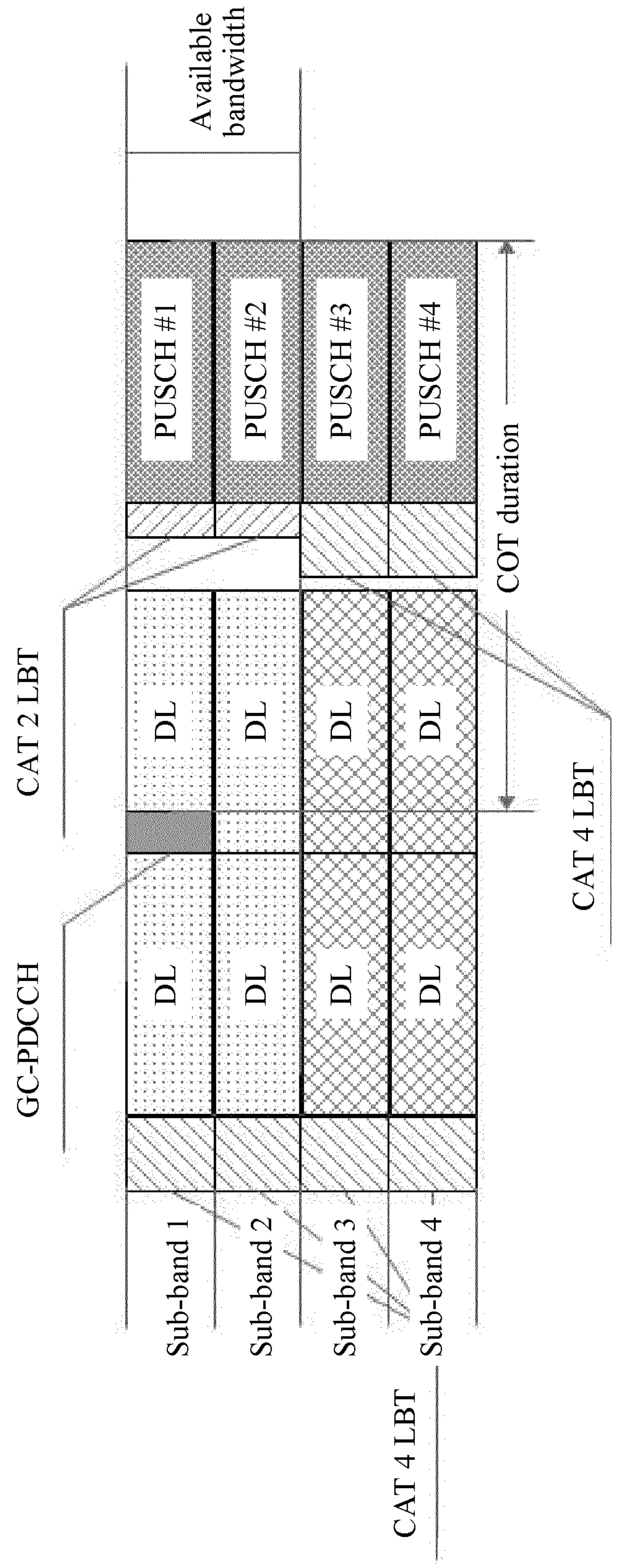
Available bandwidth
PUSCH #1
PUSCH #2
PUSCH #3
PUSCH #4
COT duration
CAT 2 LBT
DL
DL
DL
DL
CAT 4 LBT
GC-PDCCH
DL
DL
DL
DL
Sub-band 1
Sub-band 2
Sub-band 3
Sub-band 4
CAT 4 LBT

FIG. 13

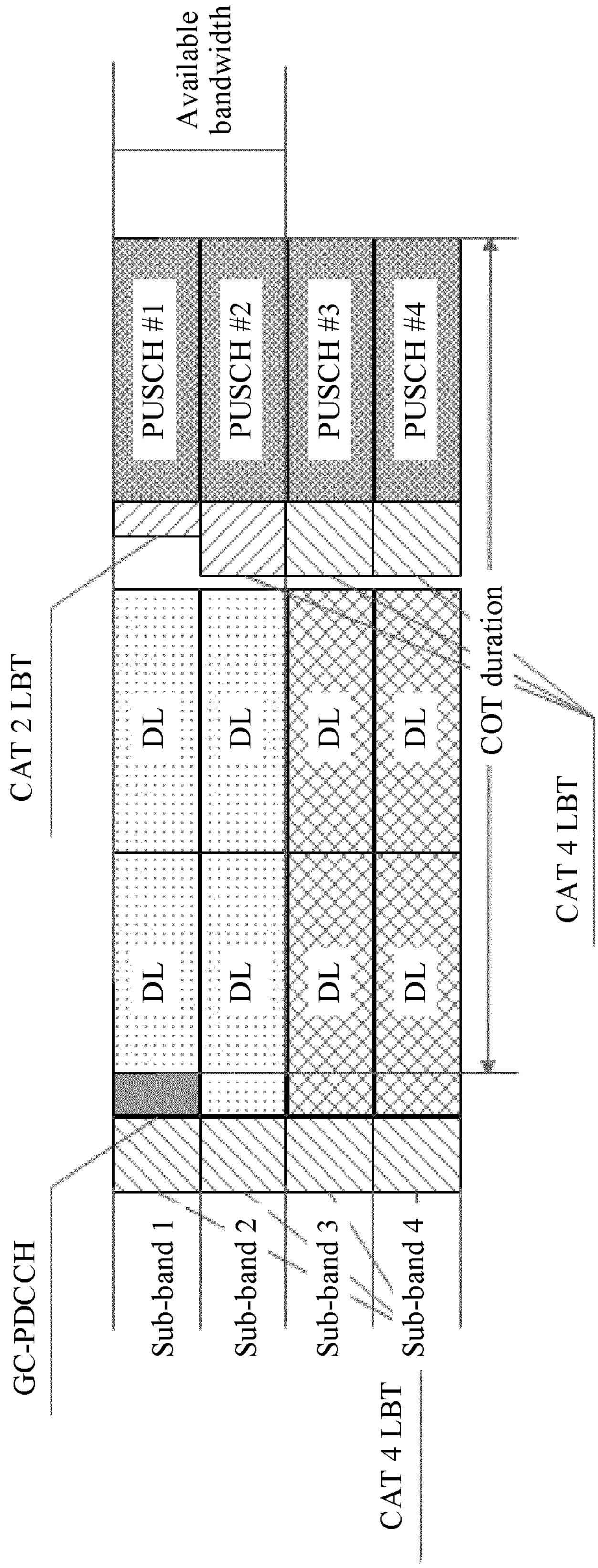
Available bandwidth
PUSCH #1
PUSCH #2
PUSCH #3
PUSCH #4
CAT 2 LBT
DL
DL
DL
DL
DL
DL
DL
DL
COT duration
CAT 4 LBT
GC-PDCCH
Sub-band 1
Sub-band 2
Sub-band 3
Sub-band 4
CAT 4 LBT

FIG. 14

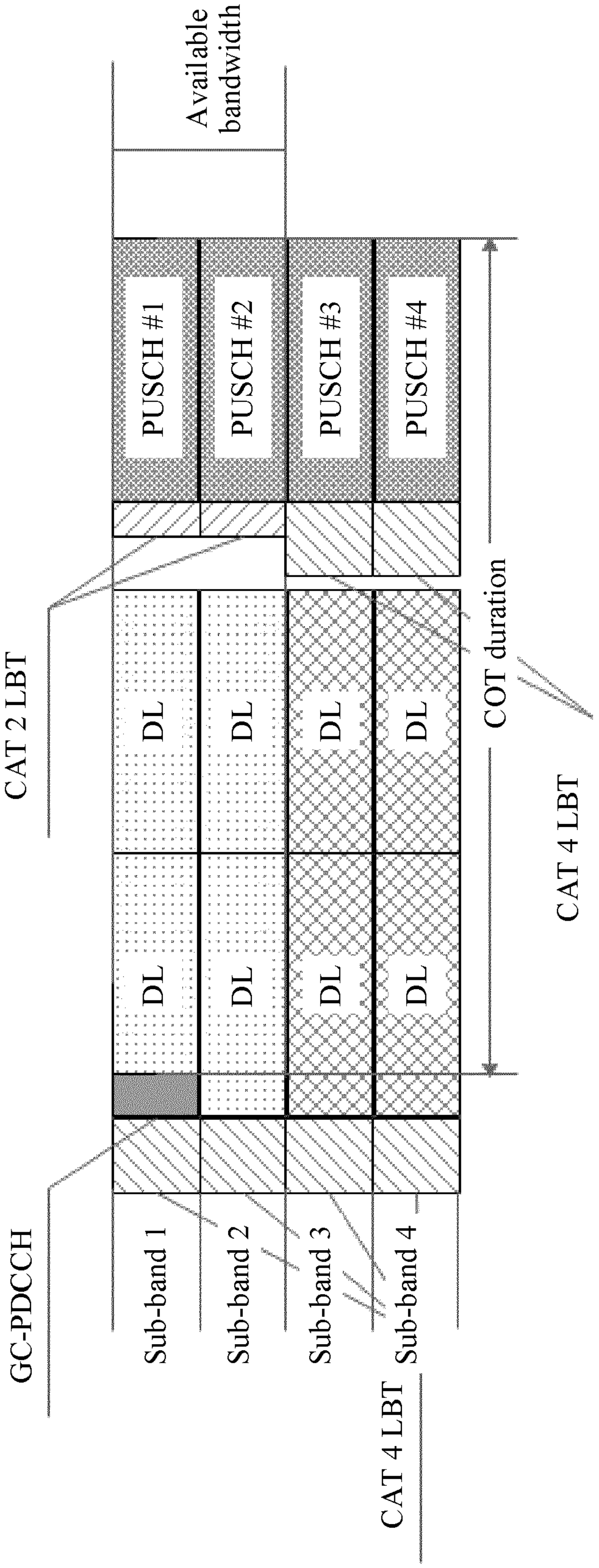
Available bandwidth
PUSCH #1
PUSCH #2
PUSCH #3
PUSCH #4
CAT 2 LBT
DL
DL
DL
DL
DL
DL
DL
DL
COT duration
CAT 4 LBT
GC-PDCCH
Sub-band 1
Sub-band 2
Sub-band 3
Sub-band 4
CAT 4 LBT

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **TCL COMMUNICATION.** Wideband carrier usage for NR-U'', vol. RAN WG1, Athens, Greece. *3GPP DRAFT; R1-1902544 WIDEBAND OPERATION FOR NR-U TCL FINAL,* 15 February 2019